(19)

(11) **EP 4 311 148 A1**

(12) **EUROPEAN PATENT APPLICATION**
published in accordance with Art. 153(4) EPC

(43) Date of publication:
**24.01.2024 Bulletin 2024/04**

(21) Application number: **22778746.2**

(22) Date of filing: **24.03.2022**

(51) International Patent Classification (IPC):
***H04L 5/00*** *(2006.01)*

(52) Cooperative Patent Classification (CPC):
**H04L 1/18; H04L 5/00; H04W 72/04**

(86) International application number:
**PCT/CN2022/082835**

(87) International publication number:
**WO 2022/206563 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 CN 202110362433**

(71) Applicant: **Huawei Technologies Co., Ltd.**
**Shenzhen, Guangdong 518129 (CN)**

(72) Inventors:
- **YANG, Fan**
  **Shenzhen, Guangdong 518129 (CN)**
- **ZHOU, Wuxiao**
  **Shenzhen, Guangdong 518129 (CN)**
- **HUANG, Haining**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **HARQ INFORMATION TRANSMISSION METHOD AND DEVICE**

(57) Embodiments of this application provide a hybrid automatic repeat request HARQ information transmission method and a device, and relate to the field of communication technologies. A terminal device receives first downlink control information, where the first downlink control information indicates a first downlink assignment index DAI and is used to schedule a physical uplink shared channel PUSCH; receives second downlink control information, where the second downlink control information indicates a second DAI and is used to schedule one or more physical downlink shared channels PDSCHs to feed back HARQ information on a same physical uplink control channel PUCCH, and the second downlink control information carries the second DAI; and selects, based on a time sequence of the first downlink control information and the second downlink control information, the first DAI or the second DAI, to determine a quantity of bits of the HARQ information multiplexed on the PUSCH. In this manner, scheduling signaling of an access network device can be reduced, implementation complexity of the access device and the terminal device can be reduced, and scheduling flexibility of the access device can be improved.

gNB
UE
Step 201: The gNB sends first downlink control information, where the first downlink control information indicates a first DAI and is used to schedule a PUSCH
Step 202: The gNB sends second downlink control information, where the second downlink control information indicates a second DAI and is used to schedule one or more PDSCHs to feed back HARQ information on a same PUCCH
Step 203A: The gNB selects, based on a time sequence of the first downlink control information and the second downlink control information, the first DAI or the second DAI, to determine a quantity of bits of the HARQ information multiplexed on the PUSCH
Step 203B: The UE selects, based on a time sequence of the first downlink control information and the second downlink control information, the first DAI or the second DAI, to determine a quantity of bits of the HARQ information multiplexed on the PUSCH

FIG. 2

EP 4 311 148 A1

# Description

## CROSS-REFERENCE TO RELATED APPLICATIONS

This application claims priority to Chinese Patent Application No. 202110362433.1, filed with the China National Intellectual Property Administration on April 2, 2021 and entitled "HARQ INFORMATION TRANSMISSION METHOD AND DEVICE", which is incorporated herein by reference in its entirety.

## TECHNICAL FIELD

This application relates to the field of communication technologies, and in particular, to a hybrid automatic repeat request (hybrid automatic repeat request, HARQ) information transmission method and a device.

## BACKGROUND

In the 5th generation (the 5th generation, 5G) mobile communication technology system, to avoid a case in which a terminal device cannot receive a physical downlink control channel (physical downlink control channel, PDCCH) or a terminal device receives a PDCCH but cannot correctly parse a downlink data physical downlink shared channel (physical downlink shared channel, PDSCH) scheduled by downlink control information (downlink control information, DCI), a downlink assignment index (downlink assignment index, DAI) mechanism is introduced. The DCI includes a DAI field, indicating a quantity of bits of HARQ information that needs to be fed back by the terminal device on a physical uplink control channel (physical uplink control channel, PUCCH) or a physical uplink shared channel (physical uplink shared channel, PUSCH). In this way, the terminal device may determine, by using the DAI field, whether a PDCCH and a corresponding downlink data PDSCH encounter missed detection.

In a 5G NR system, the DAI mechanism includes two different DAIs: a counter DAI (counter DAI), used to count a quantity of PDCCHs or PDSCHs that are sent/scheduled within a current PDCCH monitoring occasion, or a specific PDCCH/PDSCH that is being currently sent/scheduled. The other DAI is a total DAI (total DAI), which indicates a quantity of downlink data PDSCHs or a quantity of PDCCHs that need to be fed back on the PUCCH/PUSCH. Further, a quantity of bits of the HARQ information fed back on the PUCCH/PUSCH or a quantity of bits of the HARQ information that needs to be multiplexed may also be obtained.

The protocol of NR Release-15 (Release-15) requires that after an uplink grant (uplink grant, LTL grant), the terminal device does not receive a PUSCH scheduled by a new downlink scheduling grant (downlink grant, DL grant). In other words, after sending the UL grant, the network device does not require the terminal device to feed back, on the PUSCH, downlink scheduling corresponding to the HARQ information. For example, if the LTL grant uses a downlink control information (downlink control information, DCI) format 1_1, the DCI carries a total DAI, indicating a quantity of PDSCHs that need to associate the HARQ information on the PUSCH, or a quantity of PDCCHs associated with the PDSCHs. Further, the UE determines, based on the total DAI, a quantity of HARQ bits that need to be fed back, to generate a HARQ codebook. Because downlink data is triggered based on a service, the network device does not know whether there is new downlink data scheduling after the UL grant. Therefore, the total DAI cannot cover subsequent scheduling; and the terminal device cannot find whether DCI encounters missed detection in subsequent scheduling, and finally cannot generate an accurate HARQ codebook.

## SUMMARY

This application provides a HARQ information transmission method and a device, to optimize a time sequence limitation on HARQ information association based on reducing scheduling overheads of an access network device, and clearly indicate a quantity of bits of associated HARQ information on a PUSCH.

According to a first aspect, an embodiment of this application provides a HARQ information transmission method. A terminal device may receive first downlink control information, where the first downlink control information indicates a first downlink assignment index DAI and is used to schedule a physical uplink shared channel PUSCH; receive second downlink control information, where the second downlink control information indicates a second DAI and is used to schedule one or more physical downlink shared channels PDSCHs to feed back hybrid automatic repeat request HARQ information on a same physical uplink control channel PUCCH; and select, based on a time sequence of the first downlink control information and the second downlink control information, the first DAI or the second DAI, to determine a quantity of bits of the HARQ information multiplexed on the PUSCH. The first downlink control information and the second downlink control information are carried on a downlink control channel PDCCH.

In this embodiment of this application, the first downlink control information may be understood as UL DCI for scheduling the uplink shared channel PUSCH, and the second downlink control information may be understood as DL DCI for scheduling the PDSCH. The time sequence mentioned herein may be a receive time sequence, a receive time, a sequence of a start time of the PDCCH carrying the DCI, or the like. This is not specifically limited herein in this application. The terminal device may determine, based on a time sequence relationship between the first downlink control information and the second control information, a DAI based on which the quantity of bits of the HARQ information associated on the PUSCH is determined. In this manner, scheduling overheads of the access network device can be reduced.

In an optional manner, the HARQ information is multiplexed on the PUSCH in the following cases:

The PUCCH overlaps the PUSCH in time domain, and the HARQ information and the PUSCH have a same priority, and the HARQ information can be multiplexed onto the PUSCH; or the terminal device receives indication signaling, where the indication signaling indicates to feed back the HARQ information of the PDSCH on the PUCCH; or the one or more PDSCHs are located in a same time window, and the time window includes one or more time units.

The indication signaling may be the same as or different from the first downlink control information and the second downlink control information. When the indication signaling is different from the first downlink control information and the second downlink control information, the indication signaling may be sent by using a media access control (media access control, MAC) layer or radio resource control (radio resource control, RRC). This is not specifically limited in this application. The time unit may be one of a slot, a symbol, a symbol group, a subframe, and a radio frame. This is not specifically limited in this application.

In an optional manner, N pieces of the second downlink control information are included, N is an integer greater than or equal to 1, if a start time of the last piece of the second downlink control information in the N pieces of the second downlink control information is later than a start time of the first downlink control information, the quantity of bits of the HARQ information multiplexed on the PUSCH is determined based on a second DAI carried in the last piece of the second downlink control information in the N pieces of the second downlink control information; or if the receive time of the last piece of the second downlink control information in the N pieces of the second downlink control information is earlier than the start time of the first downlink control information, the quantity of bits of the HARQ information multiplexed on the PUSCH is determined based on the first DAI. Downlink control information includes the first downlink control information and the second downlink control information, the start time is a start time of the PDCCH that carries the downlink control information, and the start time of the PDCCH may be a first orthogonal frequency division multiplexing OFDM symbol of the PDCCH in time domain.

In this embodiment of this application, a plurality of pieces of the second downlink control information may be included. The terminal device receives N pieces of the second downlink control information within L PDCCH monitoring occasions, the second downlink control information is carried on the PDCCH, the N pieces of the second downlink control information schedule M downlink shared channels PDSCHs, HARQ information of the M PDSCHs is fed back on a same PUCCH, and the N pieces of the second downlink control information are sorted first in an index ascending sequence of control resource sets CORESETs or search spaces Search Spaces in a same serving cell, then, in an index ascending sequence of serving cells within a same PDCCH monitoring occasion, and finally in an index ascending sequence of PDCCH monitoring occasions. The last piece of the second downlink control information is an $N^{th}$ piece of the N pieces of the second downlink control information. Alternatively, the terminal device may use, as the last piece of the second downlink control information in the N pieces of second downlink control information, second downlink control information that is sent last in a time window. Alternatively, the last piece of the second downlink control information may be determined based on a time interval at which the second downlink control information is received. For example, it is assumed that the time interval is S seconds. The terminal device receives second downlink control information A, and receives another piece of second downlink control information B after W seconds. If S is less than or equal to W, it may be considered that the second downlink control information A is the last piece of the second downlink control information. If S is greater than W, it cannot be determined whether the second downlink control information B is the last piece of the second downlink control information, unless it is determined that no second downlink control information is received within S seconds after the second downlink control information B is received. In this case, it may be considered that the second downlink control information B is the last piece of the second downlink control information.

In this embodiment of this application, a DAI that is used to determine the quantity of bits of the HARQ information multiplexed on the PUSCH is determined based on a start time sequence of the last piece of the second downlink control information and the first downlink control information. This may reduce signaling overheads of the access network device, and further improve data processing efficiency. When the first downlink control information is the UL DCI, the HARQ information is multiplexed on the PUSCH.

In an optional manner, N pieces of the first downlink control information are included, N is an integer greater than or equal to 1, if a start time of a second search space is later than a start time of a first search space, the quantity of bits of the HARQ information multiplexed on the PUSCH is determined based on a second DAI carried in the last piece of the second downlink control information in the N pieces of the second downlink control information, where the second search space is a search space associated with a second PDCCH monitoring occasion, and the second PDCCH monitoring occasion is an occasion on which the last piece of the second downlink control information in the N pieces of the second downlink control information is received; and the first search space is a search space associated with a first PDCCH monitoring occasion, and the first PDCCH monitoring occasion is an occasion on which the first downlink control information is received; or if the start time of the second search space is earlier than the start time of the first search space, the quantity of bits of the HARQ information multiplexed on the PUSCH is determined based on the first DAI.

In this embodiment of this application, a DAI that is used to determine the quantity of bits of the HARQ information multiplexed on the PUSCH is determined based on the start time of the search spaces associated with the monitoring occasions of the last piece of the second downlink control information and the first downlink control information. This can reduce signaling overheads of the access network device, and further improve data processing efficiency. When the first downlink control information is the UL DCI, the HARQ information is multiplexed on the PUSCH.

In an optional manner, if an index of the second PDCCH monitoring occasion is greater than an index of the first PDCCH monitoring occasion, the quantity of bits of the HARQ information multiplexed on the PUSCH is determined based on the second DAI carried in the last piece of the second downlink control information in the N pieces of the second downlink control information; or if the index of the second PDCCH monitoring occasion is less than the index of the first PDCCH monitoring occasion, the quantity of bits of the HARQ information multiplexed on the PUSCH is determined based on the first DAI.

In this embodiment of this application, a DAI that is used to determine the quantity of bits of the HARQ information multiplexed on the PUSCH is determined based on values of the indexes of the monitoring occasions of the last piece of the second downlink control information and the first downlink control information, so that signaling overheads of the access network device can be reduced, and data processing efficiency can be improved. When the first downlink control information is the UL DCI, the HARQ information is multiplexed on the PUSCH.

In an optional manner, the PUSCH is sent for M times in time domain, M is greater than or equal to 1, and a quantity of bits of the HARQ information carried on the PUSCH sent for the first time is determined based on the first DAI; if the start time of the second downlink control information is earlier than the start time of the first downlink control information, a quantity of bits of the HARQ information carried on the PUSCH sent for an $i^{th}$ time is determined based on the first DAI; or if the start time of the second downlink control information is later than the start time of the first downlink control information, the quantity of bits of the HARQ information carried on the PUSCH sent for the $i^{th}$ time is determined based on the second DAI, where $1<i\leq M$.

In this embodiment of this application, compared a case in which HARQ information can be associated only in a time unit after PUSCH repetition is received, when the PUSCH repetition is sent, different HARQ information association policies are used for PUSCHs with different quantities of sending times, so that more time units can be reused, and a HARQ information transmission delay can be reduced.

In an optional manner, a quantity of bits of the HARQ information carried on Q sent PUSCHs that are of a first redundancy version is determined based on the first DAI, Q is an integer, $1\leq Q\leq M$, and the first redundancy version is a redundancy version 0 or 3; if the start time of the second downlink control information is earlier than the start time of the first downlink control information, a quantity of bits of the HARQ information carried on M-Q sent PUSCHs that are of a second redundancy version is determined based on the first DAI; or if the start time of the second downlink control information is later than the start time of the first downlink control information, the quantity of bits of the HARQ information carried on the M-Q sent PUSCHs that are of the second redundancy version is determined based on the second DAI, where the second redundancy version is a redundancy version other than the redundancy version 0 and/or 3.

In this embodiment of this application, compared a case in which HARQ information can be associated only in a time unit after PUSCH repetition is received, when the PUSCH repetition is sent, different HARQ information association policies are used for PUSCHs with different quantities of sending times, so that more time units can be reused, and a HARQ information transmission delay can be reduced, thereby improving scheduling flexibility of the access network device.

According to a second aspect, an embodiment of this application provides a HARQ information transmission method. A terminal device receives first downlink control information, where the downlink control information is carried on a physical downlink control channel PDCCH, the first downlink control information includes a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers; determines a quantity of bits of hybrid automatic repeat request HARQ information based on the first DAI, where the HARQ information is determined after the terminal device receives the PDCCH; and sends the HARQ information.

In this embodiment of this application, the first downlink control information may be understood as UL DCI for scheduling the uplink shared channel PUSCH, and the second downlink control information may be understood as DL DCI for scheduling the downlink shared channel PDSCH. This is not specifically limited herein in this application. In this application, a maximum quantity of PDCCHs that are on one or more carriers and that are scheduled by the access network device before and after the first control information is indicated by the first DAI of the first downlink control information, so that a case in which a quantity of bits of the HARQ information cannot be aligned with the access network device because the terminal device misses detecting downlink control information can be avoided.

In an optional manner, second downlink control information is received, where the second downlink control information indicates a second DAI and is used to schedule one or more physical downlink shared channels PDSCHs to feed back the hybrid automatic repeat request HARQ information on a same physical uplink control channel PUCCH, the second DAI indicates a quantity of PDCCHs already scheduled within a current PDCCH monitoring occasion, and the second DAI is less than or equal to the first DAI.

In an optional manner, the first DAI indicates a sum of the first PDCCH quantity and the second PDCCH quantity; and the second downlink control information is received within L PDCCH monitoring occasions, where N pieces of the second downlink control information are included, L and N are both integers greater than or equal to 1 and L≤N, as indexes of the PDCCH monitoring occasions increase, second DAIs sequentially increase, and the second DAI is less than the sum of the first PDCCH quantity and the second PDCCH quantity.

In this embodiment of this application, the terminal device feeds back NACK information when the terminal device does not receive the PDCCH, so that the access network device learns that the terminal device does not correctly receive the PDSCH. By using the second DAI, the terminal device may detect whether DCI encounters missed detection, to avoid a case in which the quantity of bits of the HARQ information cannot be aligned with the access network device because the terminal device misses detecting the DCI.

In an optional manner, the second downlink control information is received within L PDCCH monitoring occasions, N pieces of the second downlink control information are included, L and N are both integers greater than or equal to 1 and L≤N, the first DAI includes a first indicator value and a second indicator value, the first indicator value indicates the first PDCCH quantity, and the second indicator value indicates the second PDCCH quantity; a start moment of M pieces of the second downlink control information is earlier than a start time of the first downlink control information, and as indexes of the PDCCH monitoring occasions increase, second DAIs of the M pieces of the second downlink control information sequentially increase, where 1≤M≤N, and M is less than or equal to the first PDCCH quantity; and a start moment of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

In this application, the second DAIs of the second downlink control information whose start time is later than the start time of the first downlink control information increase starting from 1 one by one, so that a case in which the quantity of bits of the HARQ information cannot be aligned with the access network device because the terminal device misses detecting the downlink control information can be avoided.

In an optional manner, if one PDCCH monitoring occasion includes a plurality of serving cells, and the plurality of serving cells include a plurality of pieces of the second downlink control information, second DAIs first increase based on an index ascending sequence of the serving cells and then sequentially increase based on an index ascending sequence of PDCCH monitoring occasions.

In an optional manner, if one PDCCH monitoring occasion includes a plurality of serving cells, one serving cell includes a plurality of pieces of the second downlink control information, and the second downlink control information is located in a plurality of control resource sets CORESETs or a plurality of search spaces search spaces, second DAIs first increase based on an index ascending sequence of the CORESETs or Search Spaces, then sequentially increase based on an index ascending sequence of the serving cells, and finally sequentially increase based on an index ascending sequence of PDCCH monitoring occasions.

In this application, a value of the second DAI is determined with reference to a PDCCH monitoring occasion, a serving cell, and a control resource set or a search space. Considering that information and dimensions are more comprehensive, the determined value of the second DAI is more reliable.

According to a third aspect, an embodiment of this application provides a HARQ information transmission method. An access network device may send first downlink control information, where the first downlink control information indicates a first downlink assignment index DAI and is used to schedule a physical uplink shared channel PUSCH; send second downlink control information, where the second downlink control information indicates a second DAI and is used to schedule one or more physical downlink shared channels PDSCHs to feed back hybrid automatic repeat request HARQ information on a same physical uplink control channel PUCCH; and select, based on a time sequence of the first downlink control information and the second downlink control information, the first DAI or the second DAI, to determine a quantity of bits of the HARQ information multiplexed on the PUSCH.

In this embodiment of this application, the access network device may be a base station, or may be an access point TRP. The first downlink control information may be understood as UL DCI for scheduling the uplink shared channel PUSCH, and the second downlink control information may be understood as DL DCI for scheduling the PDSCH. The time sequence mentioned herein may be a receive time sequence, a receive time, a sequence of a start time of the PDCCH carrying the DCI, or the like. This is not specifically limited herein in this application. The access network device may determine, based on a time sequence relationship between the first downlink control information and the second control information, a DAI based on which the quantity of bits of the HARQ information multiplexed on the PUSCH or the PUCCH is determined. In this manner, authentication may be performed on the quantity of bits of the HARQ information fed back by the terminal device. The first DAI and the second DAI may be a total (total) DAI or a counter (counter) DAI. This is not limited in this application. Optionally, when the first downlink control information is the LTL DCI, the first DAI is the total DAI.

In an optional manner, the HARQ information is multiplexed on the PUSCH in the following cases: The PUCCH overlaps the PUSCH in time domain, and the HARQ information and the PUSCH have a same priority, and the HARQ information can be multiplexed onto the PUSCH; or the access network device sends indication signaling, where the indication signaling indicates to feed back the HARQ information of the PDSCH on the PUCCH; or the one or more PDSCHs are located in a same time window, and the time window includes one or more time units.

The indication signaling may be the same as or different from the first downlink control information and the second downlink control information. When the indication signaling is different from the first downlink control information and the second downlink control information, the indication signaling may be sent by using a media access control (media access control, MAC) layer or radio resource control (radio resource control, RRC). This is not specifically limited in this application. The time unit may be one of a slot, a symbol, a symbol group, a subframe, and a radio frame. This is not specifically limited in this application.

In an optional manner, N pieces of the second downlink control information are included, N is an integer greater than or equal to 1, if a start time of the last piece of the second downlink control information in the N pieces of the second downlink control information is later than a start time of the first downlink control information, the quantity of bits of the HARQ information multiplexed on the PUSCH is determined based on a second DAI carried in the last piece of the second downlink control information in the N pieces of the second downlink control information; or if the start time of the last piece of the second downlink control information in the N pieces of the second downlink control information is earlier than the start time of the first downlink control information, the quantity of bits of the HARQ information multiplexed on the PUSCH is determined based on the first DAI.

In an optional manner, N pieces of the second downlink control information are included, N is an integer greater than or equal to 1, if a start time of a second search space is later than a start time of a first search space, the quantity of bits of the HARQ information multiplexed on the PUSCH is determined based on a second DAI carried in the last piece of the second downlink control information in the N pieces of the second downlink control information, where the second search space is a search space associated with a second PDCCH monitoring occasion, and the second PDCCH monitoring occasion is an occasion on which the access network device sends the last piece of the second downlink control information in the N pieces of the second downlink control information; and the first search space is a search space associated with a first PDCCH monitoring occasion, and the first PDCCH monitoring occasion is an occasion on which the access network device sends the first downlink control information; or if the start time of the second search space is earlier than the start time of the first search space, the quantity of bits of the HARQ information multiplexed on the PUSCH is determined based on the first DAI.

In an optional manner, if an index of the second PDCCH monitoring occasion is greater than an index of the first PDCCH monitoring occasion, the quantity of bits of the HARQ information multiplexed on the PUSCH is determined based on the second DAI carried in the last piece of the second downlink control information in the N pieces of the second downlink control information; or if the index of the second PDCCH monitoring occasion is less than the index of the first PDCCH monitoring occasion, the quantity of bits of the HARQ information multiplexed on the PUSCH is determined based on the first DAI.

In an optional manner, the PUSCH is sent for M times in time domain, M is greater than or equal to 1, and a quantity of bits of the HARQ information multiplexed on the PUSCH sent for the first time is determined based on the first DAI; if the start time of the second downlink control information is earlier than the start time of the first downlink control information, a quantity of bits of the HARQ information multiplexed on the PUSCH sent for an $i^{th}$ time is determined based on the first DAI; or if the second downlink control information is later than the first downlink control information in time sequence, the quantity of bits of the HARQ information multiplexed on the PUSCH sent for the $i^{th}$ time is determined based on the second DAI, where $1<i\leq M$.

In an optional manner, a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3; if the second downlink control information is earlier than the first downlink control information in time sequence, a quantity of bits of the HARQ information multiplexed on M-Q sent PUSCHs that are of a second redundancy version is determined based on the first DAI; or if the second downlink control information is later than the first downlink control information in time sequence, the quantity of bits of the HARQ information multiplexed on the M-Q sent PUSCHs that are of the second redundancy version is determined based on the second DAI, where the second redundancy version is a redundancy version other than the redundancy version 0 and/or 3.

According to a fourth aspect, an embodiment of this application provides a HARQ information transmission method. An access network device may send first downlink control information, where the downlink control information is carried on a physical downlink control channel PDCCH, the first downlink control information includes a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers; determine a quantity of bits of hybrid automatic repeat request HARQ information based on the first DAI, where the HARQ information is determined after the terminal device receives the PDCCH; and receive the HARQ information.

In an optional manner, the access network device sends second downlink control information, where the second downlink control information indicates a second DAI and is used to schedule one or more physical downlink shared channels PDSCHs to feed back the hybrid automatic repeat request HARQ information on a same physical uplink control channel PUCCH, the second DAI indicates a quantity of PDCCHs already scheduled within a current PDCCH monitoring occasion, and the second DAI is less than or equal to the first DAI.

In an optional manner, the first DAI indicates a sum of the first PDCCH quantity and the second PDCCH quantity; and the second downlink control information is received within L PDCCH monitoring occasions, where N pieces of the second downlink control information are included, L and N are both integers greater than or equal to 1 and L≤N, as indexes of the PDCCH monitoring occasions increase, second DAIs sequentially increase, and the second DAI is less than the sum of the first PDCCH quantity and the second PDCCH quantity.

In an optional manner, the second downlink control information is received within L PDCCH monitoring occasions, N pieces of the second downlink control information are included, L and N are both integers greater than or equal to 1 and L≤N, the first DAI includes a first indicator value and a second indicator value, the first indicator value indicates the first PDCCH quantity, and the second indicator value indicates the second PDCCH quantity; a start time of M pieces of the second downlink control information is earlier than a start time of the first downlink control information, and as indexes of the PDCCH monitoring occasions increase, second DAIs of the M pieces of the second downlink control information sequentially increase, where 1≤M≤N, and M is less than or equal to the first PDCCH quantity; and a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

In an optional manner, if one PDCCH monitoring occasion includes a plurality of serving cells, and the plurality of serving cells include a plurality of pieces of the second downlink control information, the second DAIs increase based on an index sequence of the serving cells, and then sequentially increase based on an index sequence of PDCCH monitoring occasions.

In an optional manner, if one PDCCH monitoring occasion includes a plurality of serving cells, one serving cell includes a plurality of pieces of the second downlink control information, and the second downlink control information is located in a plurality of control resource sets CORESETs or a plurality of search spaces search spaces, second DAIs increase based on an index sequence of the CORESETs or Search Spaces, then sequentially increase based on an index sequence of the serving cells, and then sequentially increase based on an index sequence of PDCCH monitoring occasions.

According to a fifth aspect, an embodiment of this application provides a terminal device, including a transceiver unit and a processing unit.

The transceiver unit is configured to: receive first downlink control information, where the first downlink control information indicates a first downlink assignment index DAI and is used to schedule a physical uplink shared channel PUSCH; and receive second downlink control information, where the second downlink control information indicates a second DAI and is used to schedule one or more physical downlink shared channels PDSCHs to feed back hybrid automatic repeat request HARQ information on a same physical uplink control channel PUCCH.

The processing unit is configured to select, based on a time sequence of the first downlink control information and the second downlink control information, the first DAI or the second DAI, to determine a quantity of bits of the HARQ information multiplexed on the PUSCH.

In an optional manner, the PUCCH overlaps the PUSCH in time domain, and the HARQ information is multiplexed onto the PUSCH.

In an optional manner, indication signaling is received, where the indication signaling indicates to feed back the HARQ information of the PDSCH on the PUCCH.

In an optional manner, the one or more PDSCHs are located in a same time window, and the time window includes one or more time units.

In an optional manner, N pieces of the second downlink control information are included, N is an integer greater than or equal to 1, and the processing unit is specifically configured to:

if a start time of the last piece of the second downlink control information in the N pieces of the second downlink control information is later than a start time of the first downlink control information, determine, based on a second DAI carried in the last piece of the second downlink control information in the N pieces of the second downlink control information, the quantity of bits of the HARQ information multiplexed on the PUSCH; or if the start time of the last piece of the second downlink control information in the N pieces of the second downlink control information is earlier than the start time of the first downlink control information, determine, based on the first DAI, the quantity of bits of the HARQ information multiplexed on the PUSCH.

In an optional manner, N pieces of the second downlink control information are included, N is an integer greater than or equal to 1, and the processing unit is specifically configured to:

if a start time of a second search space is later than a start time of a first search space, determine, based on a second DAI carried in the last piece of the second downlink control information in the N pieces of the second downlink control information, the quantity of bits of the HARQ information multiplexed on the PUSCH, where the second search space is a search space associated with a second PDCCH monitoring occasion, and the second PDCCH monitoring occasion is an occasion on which the last piece of the second downlink control information in the N pieces of the second downlink control information is received; and the first search space is a search space associated with a first PDCCH monitoring occasion, and the first PDCCH monitoring occasion is an occasion on which the first downlink control information is received; or if the start time of the second search space is earlier than the start time of the first search space, determine, based on the first DAI, the quantity of bits of the HARQ information multiplexed on the PUSCH.

In an optional manner, the processing unit is specifically configured to:

if an index of the second PDCCH monitoring occasion is greater than an index of the first PDCCH monitoring occasion, determine, based on the second DAI carried in the last piece of the second downlink control information in the N pieces of the second downlink control information, the quantity of bits of the HARQ information multiplexed on the PUSCH; or if the index of the second PDCCH monitoring occasion is less than the index of the first PDCCH monitoring occasion, determine, based on the first DAI, the quantity of bits of the HARQ information multiplexed on the PUSCH.

In an optional manner, the PUSCH is sent for M times in time domain, M is greater than or equal to 1, and a quantity of bits of the HARQ information multiplexed on the PUSCH sent for the first time is determined based on the first DAI;

if the start time of the second downlink control information is earlier than the start time of the first downlink control information, a quantity of bits of the HARQ information multiplexed on the PUSCH sent for an $i^{th}$ time is determined based on the first DAI; or if the second downlink control information is later than the first downlink control information in time sequence, the quantity of bits of the HARQ information multiplexed on the PUSCH sent for the $i^{th}$ time is determined based on the second DAI, where $1<i\leq M$.

In an optional manner, a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3; if the second downlink control information is earlier than the first downlink control information in time sequence, a quantity of bits of the HARQ information multiplexed on M-Q sent PUSCHs that are of a second redundancy version is determined based on the first DAI; or if the second downlink control information is later than the first downlink control information in time sequence, the quantity of bits of the HARQ information multiplexed on the M-Q sent PUSCHs that are of the second redundancy version is determined based on the second DAI, where the second redundancy version is a redundancy version other than the redundancy version 0 and/or 3.

According to a sixth aspect, an embodiment of this application provides a terminal device, including a transceiver unit and a processing unit.

The transceiver unit is configured to: receive first downlink control information, where the first downlink control information is carried on a physical downlink control channel PDCCH, the first downlink control information includes a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers. The processing unit is configured to determine a quantity of bits of hybrid automatic repeat request HARQ information based on the first DAI, where the HARQ information is determined after the terminal device receives the PDCCH. The transceiver unit is further configured to send the HARQ information.

In an optional manner, the terminal device receives second downlink control information, where the second downlink control information indicates a second DAI and is used to schedule one or more physical downlink shared channels PDSCHs to feed back the HARQ information on a same physical uplink control channel PUCCH, the second DAI indicates a quantity of PDCCHs already scheduled within a current PDCCH monitoring occasion, and the second DAI is less than or equal to the first DAI.

In an optional manner, the first DAI indicates a sum of the first PDCCH quantity and the second PDCCH quantity; and

the second downlink control information is received within L PDCCH monitoring occasions, where N pieces of the second downlink control information are included, L and N are both integers greater than or equal to 1 and L≤N, as indexes of the PDCCH monitoring occasions increase, second DAIs sequentially increase, and the second DAI is less than the sum of the first PDCCH quantity and the second PDCCH quantity.

In an optional manner, the second downlink control information is received within L PDCCH monitoring occasions, N pieces of the second downlink control information are included, L and N are both integers greater than or equal to 1 and L≤N, the first DAI includes a first indicator value and a second indicator value, the first indicator value indicates the first PDCCH quantity, and the second indicator value indicates the second PDCCH quantity; a start time of M pieces of the second downlink control information is earlier than a start time of the first downlink control information, and as indexes of the PDCCH monitoring occasions increase, second DAIs of the M pieces of the second downlink control information sequentially increase, where 1≤M≤N, and M is less than or equal to the first PDCCH quantity; and a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

In an optional manner, if one PDCCH monitoring occasion includes a plurality of serving cells, and the plurality of serving cells include a plurality of pieces of the second downlink control information, second DAIs first increase based on an index ascending sequence of the serving cells, and then sequentially increase based on an index ascending sequence of PDCCH monitoring occasions.

In an optional manner, if one PDCCH monitoring occasion includes a plurality of serving cells, one serving cell includes a plurality of pieces of the second downlink control information, and the second downlink control information is located in a plurality of control resource sets CORESETs or a plurality of search spaces search spaces, second DAIs first increase based on an index ascending sequence of the CORESETs or Search Spaces, then sequentially increase based on an index ascending sequence of the serving cells, and then finally sequentially increase based on an index ascending sequence of PDCCH monitoring occasions.

According to a seventh aspect, an embodiment of this application provides an access network device, including a transceiver unit and a processing unit.

The transceiver unit is configured to: send first downlink control information, where the first downlink control information indicates a first downlink assignment index DAI and is used to schedule a physical uplink shared channel PUSCH; and send second downlink control information, where the second downlink control information is used to schedule one or more physical downlink shared channels PDSCHs to feed back hybrid automatic repeat request HARQ information on a same physical uplink control channel PUCCH. The processing unit is configured to select, based on a time sequence of the first downlink control information and the second downlink control information, the first DAI or the second DAI, to determine a quantity of bits of the HARQ information multiplexed on the PUSCH.

In an optional manner, the PUCCH overlaps the PUSCH in time domain, and the HARQ information is multiplexed onto the PUSCH.

In an optional manner, indication signaling is received, where the indication signaling indicates to feed back the HARQ information of the PDSCH on the PUCCH.

In an optional manner, the one or more PDSCHs are located in a same time window, and the time window includes one or more time units.

In an optional manner, N pieces of the second downlink control information are included, N is an integer greater than or equal to 1, and the processing unit is specifically configured to:

if a start time of the last piece of the second downlink control information in the N pieces of the second downlink control information is later than a start time of the first downlink control information, determine, based on a second DAI carried in the last piece of the second downlink control information in the N pieces of the second downlink control information, the quantity of bits of the HARQ information multiplexed on the PUSCH; or if the start time of the last piece of the second downlink control information in the N pieces of the second downlink control information is earlier than the start time of the first downlink control information, determine, based on the first DAI, the quantity of bits of the HARQ information multiplexed on the PUSCH.

In an optional manner, N pieces of the second downlink control information are included, N is an integer greater than or equal to 1, and the processing unit is specifically configured to:

if a start time of a second search space is later than a start time of a first search space, determine, based on a second DAI carried in the last piece of the second downlink control information in the N pieces of the second downlink control information, the quantity of bits of the HARQ information multiplexed on the PUSCH, where the second search space is a search space associated with a second PDCCH monitoring occasion, and the second PDCCH monitoring occasion is an occasion on which the access network device sends the last piece of the second downlink control information in the N pieces of the second downlink control information; and the first search space is a search space associated with a first PDCCH monitoring occasion, and the first PDCCH monitoring occasion is an occasion on which the access network device sends the first downlink control information; or if the start time of the second search space is earlier than the start time of the first search space, determine, based on the first DAI, the quantity of bits of the HARQ information multiplexed on the PUSCH.

In an optional manner, the processing unit is specifically configured to:
if an index of the second PDCCH monitoring occasion is greater than an index of the first PDCCH monitoring occasion, determine, based on the second DAI carried in the last piece of the second downlink control information in the N pieces of the second downlink control information, the quantity of bits of the HARQ information multiplexed on the PUSCH; or if the index of the second PDCCH monitoring occasion is less than the index of the first PDCCH monitoring occasion, determine, based on the first DAI, the quantity of bits of the HARQ information multiplexed on the PUSCH.

In an optional manner, the PUSCH is sent for M times in time domain, M is greater than or equal to 1, and a quantity of bits of the HARQ information multiplexed on the PUSCH sent for the first time is determined based on the first DAI; if the start time of the second downlink control information is earlier than the start time of the first downlink control information, a quantity of bits of the HARQ information multiplexed on the PUSCH sent for an $i^{th}$ time is determined based on the first DAI; or if the second downlink control information is later than the first downlink control information in time sequence, the quantity of bits of the HARQ information multiplexed on the PUSCH sent for the $i^{th}$ time is determined based on the second DAI, where $1<i\leq M$.

In an optional manner, a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3; if the second downlink control information is earlier than the first downlink control information in time sequence, a quantity of bits of the HARQ information multiplexed on M-Q sent PUSCHs that are of a second redundancy version is determined based on the first DAI; or if the second downlink control information is later than the first downlink control information in time sequence, the quantity of bits of the HARQ information multiplexed on the M-Q sent PUSCHs that are of the second redundancy version is determined based on the second DAI, where the second redundancy version is a redundancy version other than the redundancy version 0 and/or 3.

According to an eighth aspect, an embodiment of this application provides an access network device, including a transceiver unit and a processing unit.

The transceiver unit is configured to send first downlink control information, where the first downlink control information is carried on a physical downlink control channel PDCCH, the first downlink control information includes a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers. The processing unit is configured to determine a quantity of bits of hybrid automatic repeat request HARQ information based on the first DAI, where the HARQ information is determined after the terminal device receives the PDCCH. The transceiver unit is further configured to receive the HARQ information.

In an optional manner, second downlink control information is sent, where the second downlink control information is used to schedule one or more physical downlink shared channels PDSCHs to feed back the HARQ information on a same physical uplink control channel PUCCH, the second DAI indicates a quantity of PDCCHs already scheduled within a current PDCCH monitoring occasion, and the second DAI is less than or equal to the first DAI.

In an optional manner, the first DAI indicates a sum of the first PDCCH quantity and the second PDCCH quantity; and the second downlink control information is received within L PDCCH monitoring occasions, where N pieces of the second downlink control information are included, L and N are both integers greater than or equal to 1 and $L\leq N$, as indexes of the PDCCH monitoring occasions increase, second DAIs sequentially increase, and the second DAI is less than the sum of the first PDCCH quantity and the second PDCCH quantity.

In an optional manner, the second downlink control information is received within L PDCCH monitoring occasions, N pieces of the second downlink control information are included, L and N are both integers greater than or equal to 1 and $L\leq N$, the first DAI includes a first indicator value and a second indicator value, the first indicator value indicates the first PDCCH quantity, and the second indicator value indicates the second PDCCH quantity; a start time of M pieces of the second downlink control information is earlier than a start time of the first downlink control information, and as indexes of the PDCCH monitoring occasions increase, second DAIs of the M pieces of the second downlink control information sequentially increase, where $1\leq M\leq N$, and M is less than or equal to the first PDCCH quantity; and a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

In an optional manner, if one PDCCH monitoring occasion includes a plurality of serving cells, and the plurality of serving cells include a plurality of pieces of the second downlink control information, second DAIs increase based on an index sequence of the serving cells, and then sequentially increase based on an index sequence of PDCCH monitoring occasions.

In an optional manner, if one PDCCH monitoring occasion includes a plurality of serving cells, one serving cell includes a plurality of pieces of the second downlink control information, and the second downlink control information is located in a plurality of control resource sets CORESETs or a plurality of search spaces search spaces, second DAIs increase based on an index sequence of the CORESETs or Search Spaces, then sequentially increase based on an index sequence of the serving cells, and then sequentially increase based on an index sequence of PDCCH monitoring occasions.

According to a ninth aspect, this application provides a terminal device, including a processor and a memory, where the memory is configured to store a computer program, and when the apparatus runs, the processor executes the computer program stored in the memory, so that the terminal device performs the method according to the first aspect or the embodiments of the first aspect or the method according to the second aspect or the embodiments of the second aspect.

According to a tenth aspect, this application provides an access network device, including a processor and a memory, where the memory is configured to store a computer program, and when the apparatus runs, the processor executes the computer program stored in the memory, so that the service access network device performs the method according to the third aspect or the embodiments of the third aspect or the method according to the fourth aspect or the embodiments of the fourth aspect.

According to an eleventh aspect, an embodiment of this application further provides a computer-readable storage medium, where the computer-readable storage medium stores a computer-readable instruction, and when the computer-readable instruction is run on a computer, the computer is enabled to perform the method according to the first aspect or any one of the possible designs of the first aspect, or the method according to the second aspect or any one of the possible designs of the second aspect, or the method according to the third aspect or any one of the possible designs of the third aspect, or the method according to the fourth aspect or any one of the possible designs of the fourth aspect.

According to a twelfth aspect, this application provides a computer program product including an instruction. When the computer program product is run on a computer, the computer is enabled to perform the method according to the first aspect or any one of the possible designs of the first aspect, or the method according to the second aspect or any one of the possible designs of the second aspect, or the method according to the third aspect or any one of the possible designs of the third aspect, or the method according to the fourth aspect or any one of the possible designs of the fourth aspect.

According to a thirteenth aspect, an embodiment of this application provides a chip system. The chip system includes a processor, and may further include a memory, and is configured to implement the method according to the first aspect or any one of the possible designs of the first aspect, or the method according to the second aspect or any one of the possible designs of the second aspect, or the method according to the third aspect or any one of the possible designs of the third aspect, or the method according to the fourth aspect or any one of the possible designs of the fourth aspect. The chip system may include a chip, or may include a chip and another discrete component.

According to a fourteenth aspect, an embodiment of this application provides a communication system, where the system includes a terminal device and an access network device, and the communication system is configured to perform the method according to the first aspect or any one of the possible designs of the first aspect, or the method according to the second aspect or any one of the possible designs of the second aspect, or the method according to the third aspect or any one of the possible designs of the third aspect, or the method according to the fourth aspect or any one of the possible designs of the fourth aspect.

For technical effects that can be achieved by the second aspect to the fourteenth aspect, refer to descriptions of technical effects that can be achieved by corresponding possible design solutions in the first aspect. Details are not described herein again in this application.

## BRIEF DESCRIPTION OF DRAWINGS

FIG. 1 is a schematic diagram of a system architecture according to an embodiment of this application;
FIG. 2 is a schematic flowchart of a HARQ information transmission method according to an embodiment of this application;
FIG. 3 is a schematic diagram of UL DCI and DL DCI scheduling;
FIG. 4 is a schematic diagram of a method for determining the last piece of DL DCI according to an embodiment of this application;
FIG. 5(a), FIG. 5(b), and FIG. 5(c) are a schematic diagram of UL DCI and DL DCI scheduling according to an embodiment of this application;
FIG. 6(a) and FIG. 6(b) are a schematic diagram of UL DCI and DL DCI scheduling according to an embodiment of this application;
FIG. 7(a) and FIG. 7(b) are a schematic diagram of UL DCI and DL DCI scheduling according to an embodiment of this application;
FIG. 8 is a schematic diagram of PUSCH repetition transmission according to an embodiment of this application;

FIG. 9 is a schematic diagram of PUSCH repetition transmission;

FIG. 10 is a schematic diagram of PUSCH repetition transmission according to an embodiment of this application;

FIG. 11(a) and FIG. 11(b) are a schematic diagram of UL DCI and DL DCI scheduling according to an embodiment of this application;

FIG. 12(a) and FIG. 12(b) are a schematic diagram of UL DCI and DL DCI scheduling according to an embodiment of this application;

FIG. 13 is a schematic flowchart of a HARQ information transmission method according to an embodiment of this application;

FIG. 14 is a schematic diagram of UL DCI and DL DCI scheduling according to an embodiment of this application;

FIG. 15 is a schematic diagram of UL DCI and DL DCI scheduling according to an embodiment of this application;

FIG. 16 is a schematic diagram of monitoring occasions and DL DCI scheduling according to an embodiment of this application;

FIG. 17 is a schematic diagram of monitoring occasions and DL DCI scheduling according to an embodiment of this application;

FIG. 18 is a schematic diagram of a structure of a communication apparatus according to an embodiment of this application; and

FIG. 19 is a schematic diagram of a structure of a communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

To better describe the solutions of this application, the following first explains and describes terms used in this application.

(1) A terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board unit, OBU).

(2) An access network device may also be referred to as a base station, a RAN node, or a RAN device. The access network device is a network-side entity configured to: transmit and/or receive a signal, and serve as a router between the terminal and a remaining part of the access network, where the remaining part of the access network may include an IP network and the like. The access network device may further coordinate attribute management of an air interface. For example, the access network device may be an evolved NodeB (evolved NodeB, eNB or e-NodeB) in LTE. The eNB is an apparatus that is deployed in a radio access network and that meets a 4G standard and provides a wireless communication function for the terminal. The access network device may alternatively be a new radio controller (new radio controller, NR controller), a gNodeB (gNB) in a 5G system, a central unit (central unit), a new radio base station, a radio remote module, a micro base station (also referred to as a small cell), a relay (relay), a distributed unit (distributed unit), macro base stations in various forms, a transmission reception point (transmission reception point, TRP), a transmission measurement function (transmission measurement function, TMF), a transmission point (transmission point, TP), any other radio access device, or a base station in next generation communication. However, embodiments of this application are not limited thereto.

(3) HARQ is a technology formed by combining forward error correction coding and automatic repeat request. For example, a network device may allocate and indicate, to the terminal, a time-frequency resource used to send channel state information (channel state information, CSI) and HARQ information, so that the terminal device sends corresponding HARQ information on the indicated time-frequency resource. For example, the network device sends downlink data on a time-frequency resource whose time domain location is a slot (slot) n by using a PDSCH, and indicates, by using a PDCCH, the terminal device to feed back, on a time-frequency resource whose time domain location is a slot (n+k), HARQ acknowledgment information corresponding to the downlink data. In this way, when receiving the data on the time-frequency resource whose time domain location is the slot n, the terminal device feeds back the HARQ information on the time-frequency resource whose time domain location is the slot (n+k).

(4) A time window may be a time range or a time period. The time period has a start time and an end time. A length of the time window is a length from the start time to the end time. One time window may include one or more time units, and the time unit may be one of a slot, a symbol, a symbol group, a subframe, and a radio frame. This is not specifically limited in this application.

(5) The terms "system" and "network" may be used interchangeably in embodiments of the present invention. "A plurality of" means two or more than two. "And/or" describes an association relationship between associated objects, and represents that three relationships may exist. For example, A and/or B may represent the following cases: Only A exists, both A and B exist, and only B exists. In addition, the character "/" generally indicates an "or" relationship between the associated objects if there is no special description.

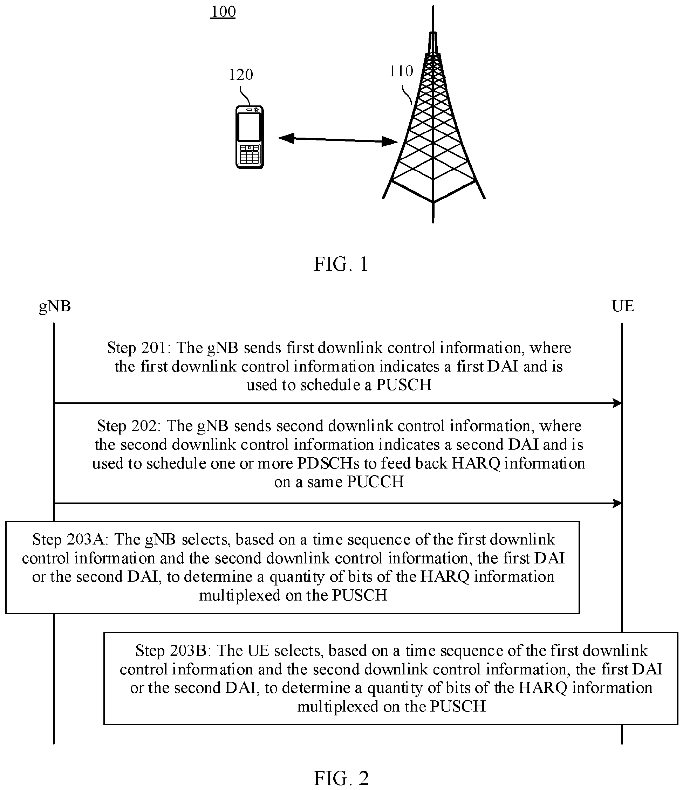

FIG. 1 shows a communication system 100 to which this application is applicable. The communication system 100 is located in a single-carrier scenario or a carrier aggregation (carrier aggregation, CA) scenario. The communication system 100 includes an access network device 110 and a terminal device 120. The access network device 110 communicates with the terminal device 120 by using a wireless network. After the access network device sends downlink control information to the terminal device, the terminal device may feed back, to the access network device, a quantity of bits of HARQ information multiplexed on a PUSCH.

The foregoing communication system to which this application is applicable is merely an example for description, and the communication system to which this application is applicable is not limited thereto. For example, a quantity of network devices and terminal devices included in the communication system may alternatively be another quantity, or a single base station and multicarrier aggregation scenario, a dual-link scenario, a device to device (device to device, D2D) communication scenario, or a coordinated multipoint transmission/reception CoMP scenario is used. CoMP may be one or more scenarios of non-coherent joint transmission (non-coherent joint transmission, NCJT), coherent joint transmission (coherent joint transmission, CJT), joint transmission (joint transmission, JT), and the like.

Embodiments of this application may be further applied to another communication system, for example, a global system for mobile communication (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunication system (universal mobile telecommunication system, UMTS), a worldwide interoperability for microwave access (worldwide interoperability for microwave access, WiMAX) communication system, a future 5th generation (5th generation, 5G) mobile communication system, or NR. The 5G mobile communication system in this application includes a non-standalone (non-standalone, NSA) 5G mobile communication system and/or a standalone (standalone, SA) 5G mobile communication system. The technical solutions provided in this application may be further applied to a future communication system, for example, a sixth generation mobile communication system. Alternatively, the communication system may be a PLMN network, a device to device D2D network, a machine to machine (machine to machine, M2M) network, an IoT network, or another network.

FIG. 2 shows a HARQ information transmission method according to an embodiment of this application. The method may be jointly implemented by a terminal device and an access network device. In addition, the terminal device and the access network device may determine, based on a same rule, a quantity of bits of HARQ information multiplexed on a PUSCH, so that the access network device can verify whether the quantity that is of bits of the HARQ information multiplexed on the PUSCH and that is determined by the terminal device is correct. In FIG. 2, an example in which a terminal device is LTE and an access network device is a gNB is used for description. The method may be performed with reference to the following steps.

Step 201: The gNB sends first downlink control information, where the first downlink control information indicates a first DAI and is used to schedule a PUSCH, where the first downlink control information carries the first DAI.

Correspondingly, the UE receives the first downlink control information.

In this embodiment of this application, the first downlink control information may be understood as UL DCI for scheduling the PUSCH. This is not specifically limited herein in this application. The first downlink control information in the following text is described by using an example that the first downlink control information is the UL DCI.

Step 202: The gNB sends second downlink control information, where the second downlink control information indicates a second DAI and is used to schedule one or more PDSCHs to feed back HARQ information on a same PUCCH, and the second downlink control information carries the second DAI.

Correspondingly, the UE receives the second downlink control information.

In this embodiment of this application, the second downlink control information may be understood as DL DCI for scheduling the PDSCH. This is not specifically limited herein in this application. The second downlink control information in the following text is described by using an example that the second downlink control information is the DL DCI.

In this embodiment of this application, step 201 and step 202 are actually performed in no sequence. FIG. 2 is merely an example for description. Alternatively, step 202 may be performed before step 201. A specific step to be performed first may be flexibly adjusted based on a scheduling requirement of the access network device.

In some cases, the PUCCH and the PUSCH usually overlap in time domain, and the PUCCH and the PUSCH have a same priority. The HARQ information can be multiplexed on the PUSCH. A quantity of bits of the HARQ information multiplexed on the PUSCH needs to be determined, so as to accurately generate a HARQ codebook. When the access network device receives the correct HARQ codebook, it can be accurately determined whether the terminal device misses detecting the DCI.

In addition, the terminal device may receive an indication instruction from the access network device. The indication instruction may be DCI or other higher layer signaling such as RRC signaling or a MAC control element (MAC CE). The indication instruction indicates to feed back the HARQ information of the PDSCH on the PUCCH. In this case, the quantity of bits of the HARQ information multiplexed on the PUSCH needs to be determined.

In addition, if one or more PDSCHs are located in a same time window, the quantity of bits of the HARQ information multiplexed on the PUSCH also needs to be determined. The time window includes one or more time units.

In the foregoing case, the HARQ information is multiplexed on the PUSCH, and the HARQ information is multiplexed on the PUSCH. The following uses an example in which the PUCCH and the PUSCH overlap in time domain for description. In another implementation, a mechanism in which the HARQ information is multiplexed on the PUSCH in the method provided in this application may also be applied.

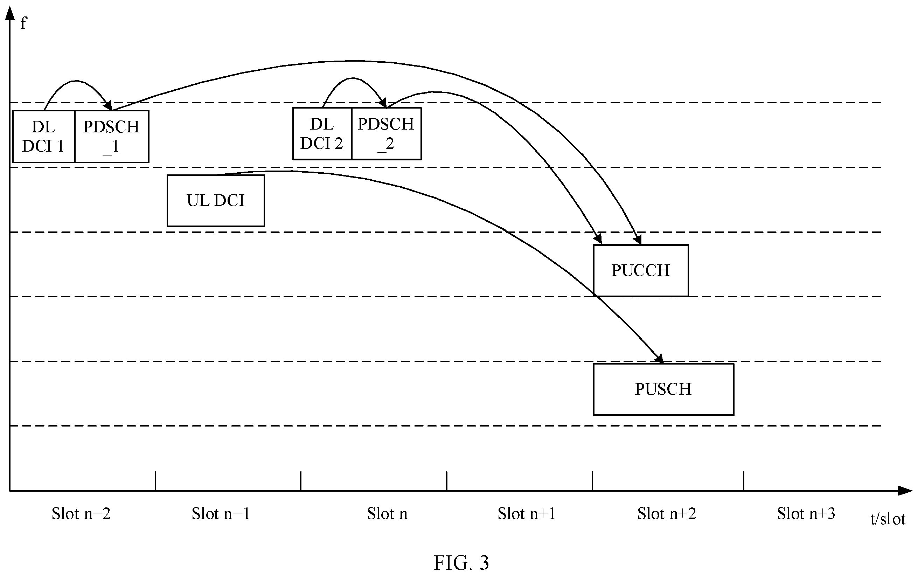

As shown in FIG. 3, the gNB sends UL DCI and DL DCI in different slots. The UL DCI performs scheduling in a slot n-1, DL DCI 1 performs scheduling in a slot n-2, and DL DCI 2 performs scheduling in a slot n. The UL DCI may schedule the PUSCH. Based on scheduling of the DL DCI 1 and the DL DCI 2, a PDSCH 1 and a PDSCH 2 may feed back the HARQ information on a same PUCCH. The PUSCH and the PUCCH overlap in a slot. To generate accurate HARQ information, refer to step 203A or 203B to determine the quantity of bits of the HARQ information multiplexed on the PUSCH. Both the UL DCI and the DL DCI are carried on a PDCCH.

Step 203A: The gNB selects, based on a time sequence of the first downlink control information and the second downlink control information, the first DAI or the second DAI, to determine the quantity of bits of the HARQ information multiplexed on the PUSCH.

Step 203B: The LTE selects, based on a time sequence of the first downlink control information and the second downlink control information, the first DAI or the second DAI, to determine the quantity of bits of the HARQ information multiplexed on the PUSCH.

The time sequence mentioned in step 203A may be understood as a time sequence in which the gNB sends the UL DCI and the DL DCI. The time sequence mentioned in step 203B may be understood as a time sequence in which the UE receives the UL DCI and the DL DCI sent by the gNB. Both the gNB and the UE may determine, based on the time sequence of the UL DCI and the DL DCI, which DAI is selected to calculate the quantity of bits of the HARQ information multiplexed on the PUSCH. This may save signaling, and may improve data processing efficiency. In addition, the terminal device and the access network device may determine, based on a same DAI, the quantity of bits of the HARQ information multiplexed on the PUSCH, and may further check the quantity of bits multiplexed by the terminal device.

In an optional embodiment, the LTE and the gNB may select the DAI in the following manners, to determine the quantity of bits of the HARQ information multiplexed on the PUSCH:

Manner 1: Determine based on a start time.

In this embodiment of this application, there may be N pieces of DL DCI, where N is an integer greater than or equal to 1. If the LTE determines that a start time of the last piece of DL DCI in the N pieces of DL DCI is later than a start time of the UL DCI, the UE determines, based on a second DAI carried in the last piece of DL DCI in the N pieces of DL DCI, the quantity of bits of the HARQ information multiplexed on the PUSCH; or if the UE determines that the start time of the last piece of DL DCI in the N pieces of DL DCI is earlier than the start time of the UL DCI, the UE determines, based on the first DAI, the quantity of bits of the HARQ information multiplexed on the PUSCH. For example, the DCI may be carried by using the PDCCH, and a start time of the DCI is a start time of the PDCCH. Specifically, the start time of the PDCCH may be a start symbol of the PDCCH or a start boundary of the start symbol of the PDCCH. This is not limited herein.

If the gNB determines that the start time of the last piece of DL DCI in the N pieces of DL DCI is later than the start time of the LTL DCI, the gNB determines, based on the second DAI carried in the last piece of DL DCI in the N pieces of DL DCI, the quantity of bits of the HARQ information multiplexed on the PUSCH; or if the gNB determines that the start time of the last piece of DL DCI in the N pieces of DL DCI is earlier than the start time of the UL DCI, the gNB determines, based on the first DAI, the quantity of bits of the HARQ information multiplexed on the PUSCH.

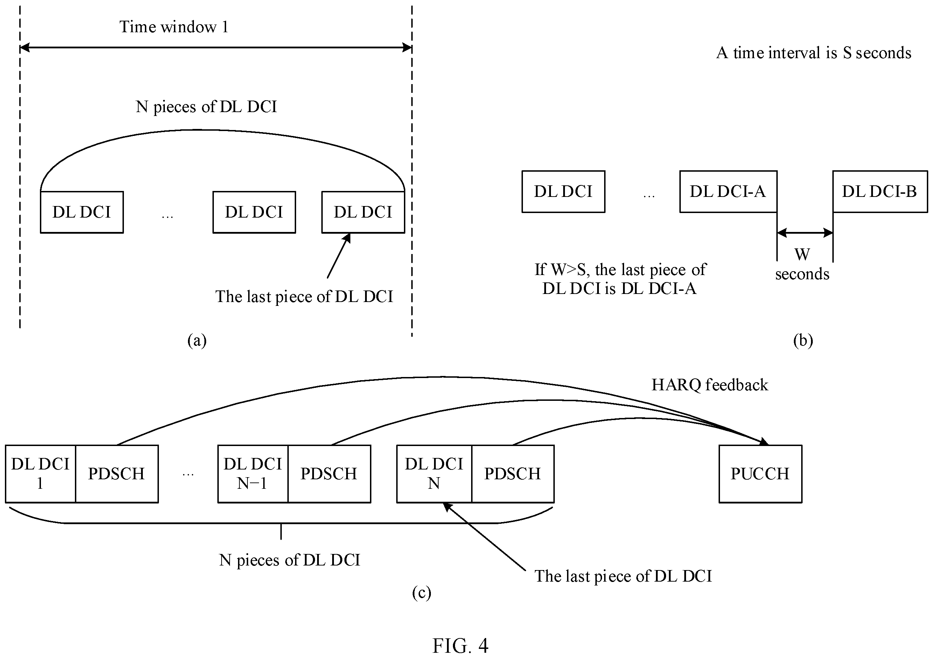

As shown in (a) in FIG. 4, the terminal device may use last received DL DCI in a time window such as a time window 1 as the last piece of DL DCI in the N pieces of DL DCI. As shown in (b) in FIG. 4, the last piece of DL DCI in the N pieces of DL DCI may alternatively be determined based on a time interval at which the DL DCI is received. For example, assuming that the time interval is S seconds, the terminal device receives DL DCI-A, and receives DL DCI-B after W seconds. If W is greater than S, it may be considered that the DL DCI-A is the last piece of DL DCI. If W is less than or equal to S, it cannot be determined whether the DL DCI-B is the last piece of DL DCI unless it is determined that no second downlink control information is received within S seconds after the second DL DCI-B is received. In this case, it may be considered that the DL DCI-B is the last piece of DL DCI. As shown in (c) in FIG. 4, PDSCHs scheduled by N pieces of DCI feed back the HARQ information on a same PUCCH, and the $N^{th}$ piece of DCI is the last piece of DCI. The manner of determining the last piece of DL DCI is also applicable to the following text. Details are not described in this application.

It should be further noted that, in a single-carrier scenario, the second DAI of the DL DCI carries only a counter DAI, and a DAI that is used to determine the quantity of bits of the HARQ information multiplexed on the PUSCH may be determined by comparing the counter DAI in the last piece of DL DCI with a total DAI of the UL DCI. In a carrier aggregation scenario, the DL DCI not only carries a counter DAI, but also carries a total DAI. A DAI used to determine the quantity of bits of the HARQ information multiplexed on the PUSCH may be determined by comparing the total DAI of the last piece of DL DCI with the total DAI of the UL DCI.

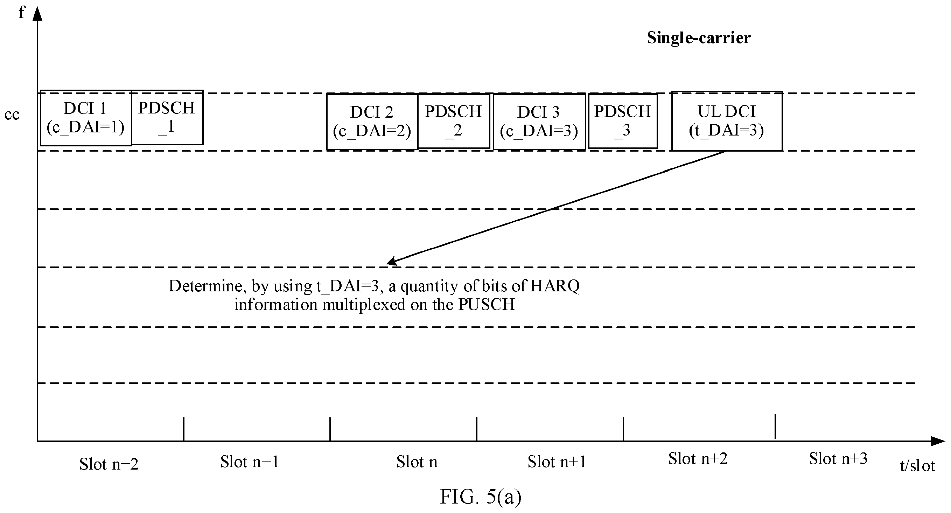

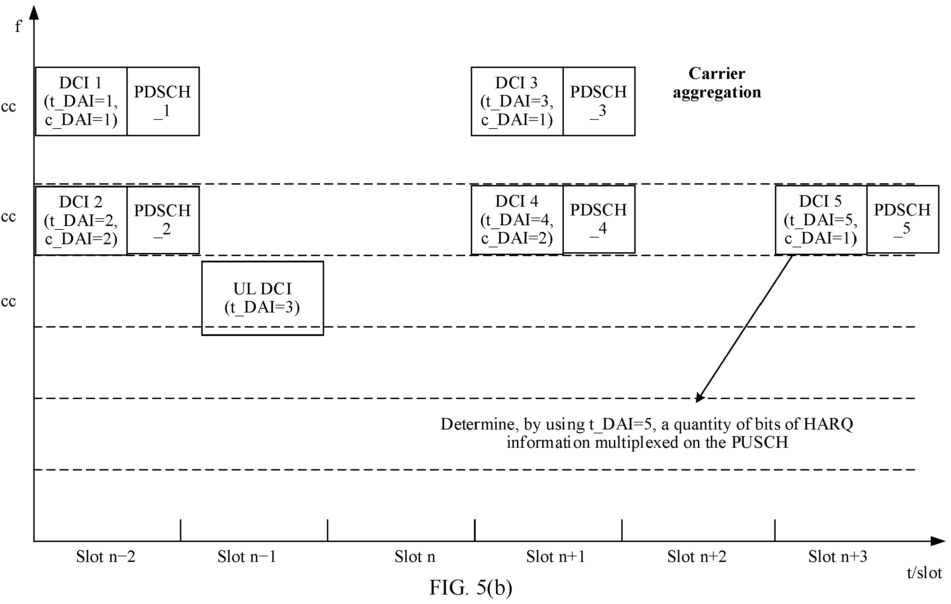

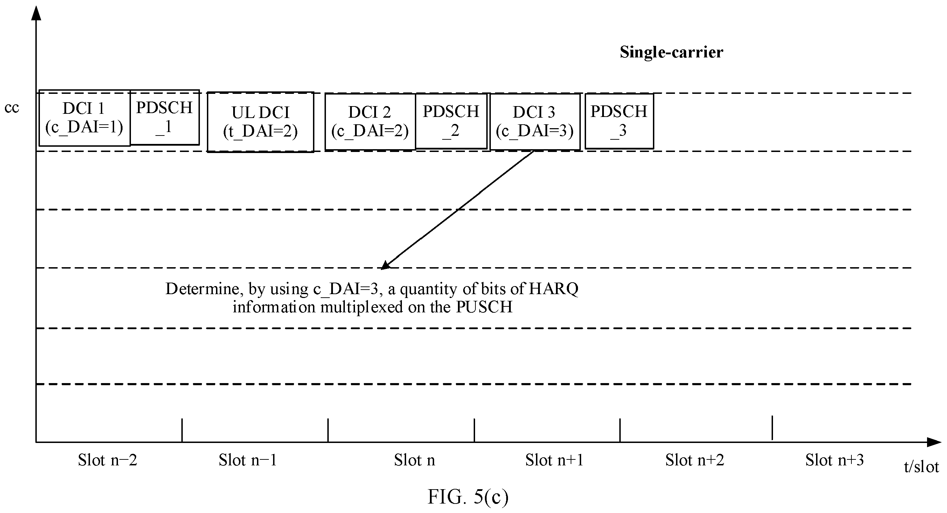

FIG. 5(a) shows that in the single-carrier scenario, the start time of the UL DCI is later than the start time of the last piece of DL DCI (that is, DL DCI 3). In this case, the total DAI (t_DAI=3) in the LTL DCI is used to determine the quantity of bits of the HARQ information multiplexed on the PUSCH. FIG. 5(b) shows that in the carrier aggregation scenario, a receive time of the LTL DCI is earlier than a receive time of the last piece of DL DCI (that is, DL DCI 5). In this case, the total DAI (t_DAI=5) in the DL DCI 5 is used to determine the quantity of bits of the HARQ information multiplexed on the PUSCH. FIG. 5(c) shows that in the single-carrier scenario, the start time of the LTL DCI is earlier than the start time of the last piece of DL DCI (that is, the DL DCI 3). In this case, the counter_ DAI (c_DAI=3) in the DL DCI is used to determine the quantity of bits of the HARQ information multiplexed on the PUSCH. In addition, in FIG. 5(a), FIG. 5(b), and FIG. 5(c), the total DAI is illustrated by using t_DAI, and the counter DAI is illustrated by using c_DAI. In addition, in FIG. 5(a), FIG. 5(b), and FIG. 5(c), one illustrated cc represents one carrier.

Due to a limitation on a quantity of bits of the DAI in the DCI, a value of the DAI in the DCI is obtained after a modulo operation is performed, DAI = (Y - 1)mod-$T_D$ + 1, where Y represents a quantity of {serving cell (serving cell), PDCCH monitoring occasion (monitoring occasion)} pairs, or a quantity of PDCCHs; and $T_D = 2^N$, where N is a quantity of bits of a DAI indicator field in the DCI. When N = 2, $T_D$ = 4, and in the DCI 5 of a slot n+3:

$$t_{DAI} = (5 - 1)\mathrm{mod}4 + 1 = 1$$

Manner 2: Determine based on a start time of a search space.

There may be N pieces of DL DCI, where N is an integer greater than or equal to 1. If a start time of a second search space is later than a start time of a first search space, the quantity of bits of the HARQ information multiplexed on the PUSCH is determined based on a second DAI carried in the last piece of DL DCI in the N pieces of DL DCI, where the second search space is a search space associated with a second PDCCH monitoring occasion, and the second PDCCH monitoring occasion is an occasion on which the UE receives the last piece of DL DCI in the N pieces of DL DCI; and the first search space is a search space associated with a first PDCCH monitoring occasion, and the first PDCCH monitoring occasion is an occasion on which the UE receives the UL DCI; or if a start time of the second search space is earlier than a start time of the first search space, the quantity of bits of the HARQ information multiplexed on the PUSCH is determined based on the first DAI. The gNB knows the second PDCCH monitoring occasion and the first PDCCH monitoring occasion in advance. Therefore, the gNB may also determine, based on a start time of a search space corresponding to each PDCCH monitoring occasion, a DAI used to determine the quantity of bits of the HARQ information multiplexed on the PUSCH.

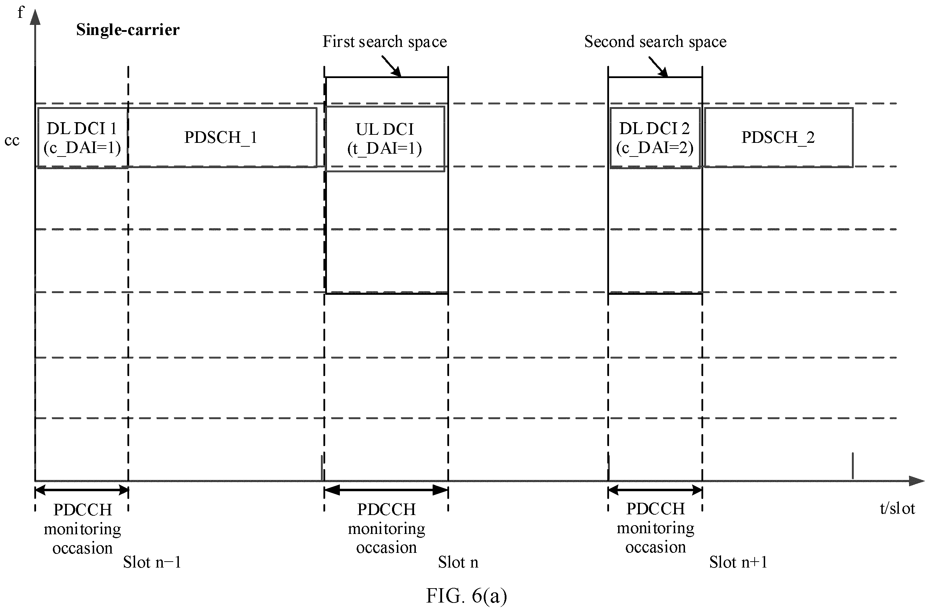

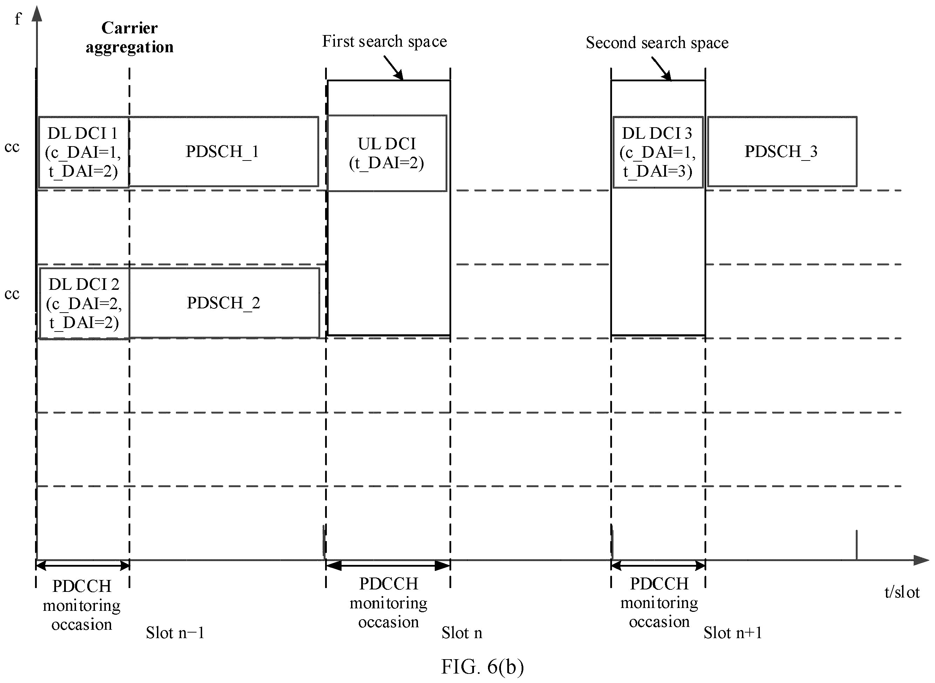

FIG. 6(a) shows that in the single-carrier scenario, the second search space is later than the first search space. In this case, the counter DAI (c_DAI=2) in the last piece of DL DCI (that is, the DL DCI 2) is used to determine the quantity of bits of the HARQ information multiplexed on the PUSCH. FIG. 6(b) shows that in the carrier aggregation scenario, the second search space is later than the first search space. In this case, the total DAI (t_DAI=3) in the last piece of DL DCI (that is, the DL DCI 3) is used to determine the quantity of bits of the HARQ information multiplexed on the PUSCH. In addition, in FIG. 6(a) and FIG. 6(b), the total DAI is illustrated by using t_DAI, and the counter DAI is illustrated by using c_DAI. In addition, in FIG. 6(a) and FIG. 6(b), one illustrated cc represents one carrier.

Manner 3: Determine based on an index value of a monitoring occasion.

N pieces of DL DCI may be included, where N is an integer greater than or equal to 1. If an index of a second PDCCH monitoring occasion is greater than an index of a first PDCCH monitoring occasion, the quantity of bits of the HARQ information multiplexed on the PUSCH is determined based on a second DAI carried in the last piece of DL DCI in the N pieces of DL DCI; or if the index of the second PDCCH monitoring occasion is less than the index of the first PDCCH monitoring occasion, the quantity of bits of the HARQ information multiplexed on the PUSCH is determined based on the first DAI.

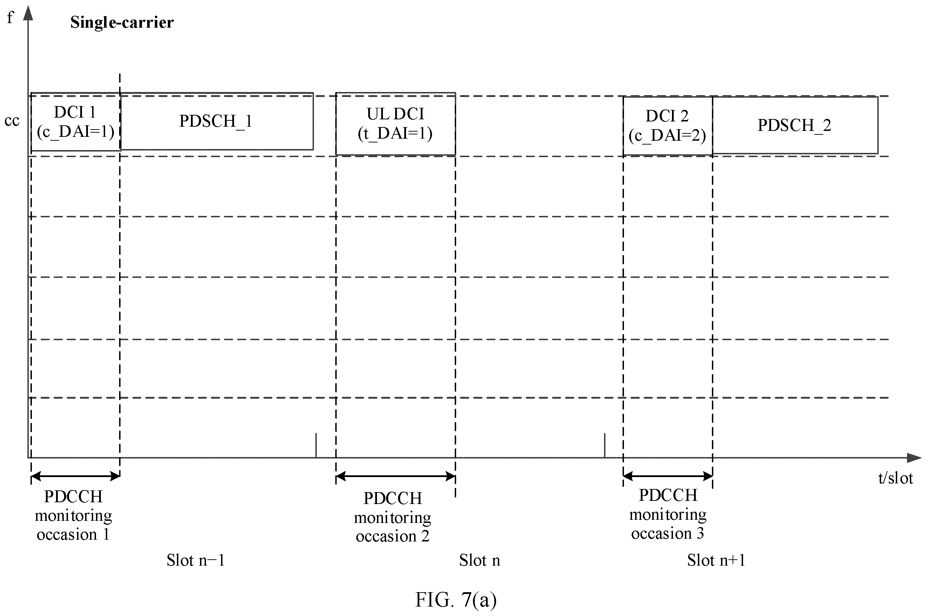

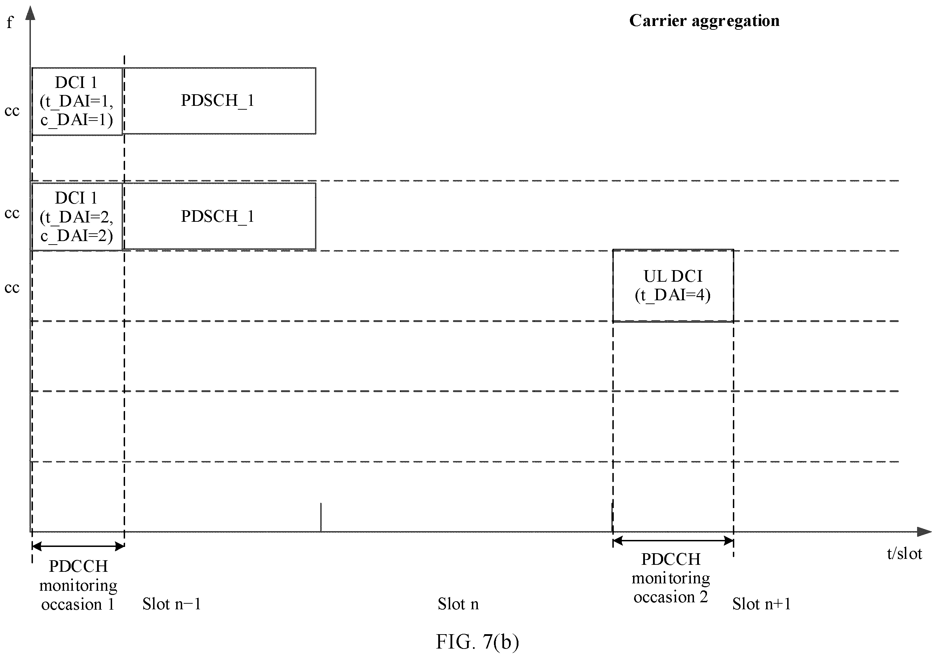

FIG. 7(a) shows that in the single-carrier scenario, the index of the second PDCCH monitoring occasion (a PDCCH monitoring occasion 3) is greater than the index of the first PDCCH monitoring occasion (a PDCCH 2). In this case, a counter DAI (t_DAI=2) in the last piece of DL DCI (that is, the DL DCI 3) is used to determine the quantity of bits of the HARQ information multiplexed on the PUSCH. FIG. 7(b) shows that in the carrier aggregation scenario, the index of the first PDCCH monitoring occasion (the PDCCH 2) is greater than the index of the second PDCCH monitoring occasion (the PDCCH 1). In this case, a total DAI (t_DAI=4) in the last piece of UL DCI is used to determine the quantity of bits of the HARQ information multiplexed on the PUSCH. In addition, in FIG. 7(a) and FIG. 7(b), the total DAI is illustrated by using t_DAI, and the counter DAI is illustrated by using c_DAI. In addition, in FIG. 7(a) and FIG. 7(b), one illustrated cc represents one carrier.

In this embodiment of this application, a DAI used to determine the quantity of bits of the HARQ information multiplexed on the PUSCH is determined based on a time sequence of receiving the last piece of the second downlink control information and the first downlink control information. This may reduce signaling overheads of the access network device, and may further improve data processing efficiency.

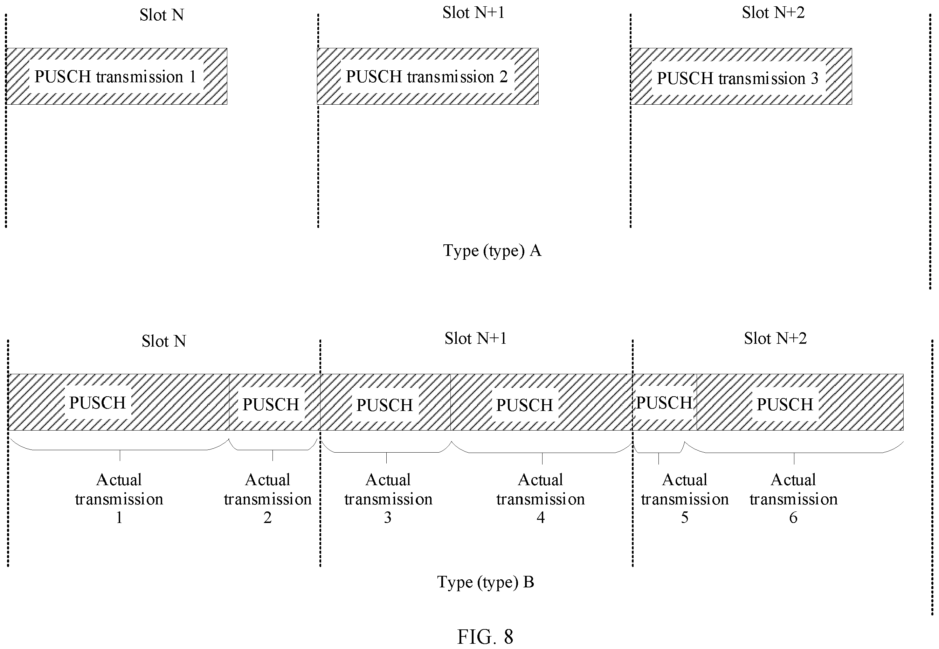

It should be noted that the access network device may further configure PUSCH repetition sending. The PUSCH repetition sending may be performed based on a type-A (that is, a slot level) or a type-B (that is, a symbol level). This is not specifically limited herein. For the Type A, in K1 times of transmission configured by a higher layer, a start symbol (Symbol S) of the PUSCH in each slot and a symbol length (L) occupied by the PUSCH are consistent in slots. In the Type B, the PUSCH is not required to occupy a same start symbol and symbol length in each slot. Starting from the start symbol, K2 times of PUSCH (nominal repetition, nominal) transmission is performed on a subsequent symbol. If a slot boundary or a symbol that cannot be used for uplink transmission is encountered in a sending process, the nominal transmission is divided into two actual transmissions. As shown in FIG. 8, for the type-A, K1=3, and actual transmission is performed for three times; and for the type-B, K2=4, and actual transmission is performed for six times. To be specific, in the type-A, PUSCH transmission for three times is configured, actual transmission is also performed for three times, and there is no repetition transmission; and in the type-B, PUSCH transmission for four times is configured, actual transmission is also performed for six times, and there are two repetition transmissions. In this application, the implementation method is applicable to both type-A and type-B repetitions.

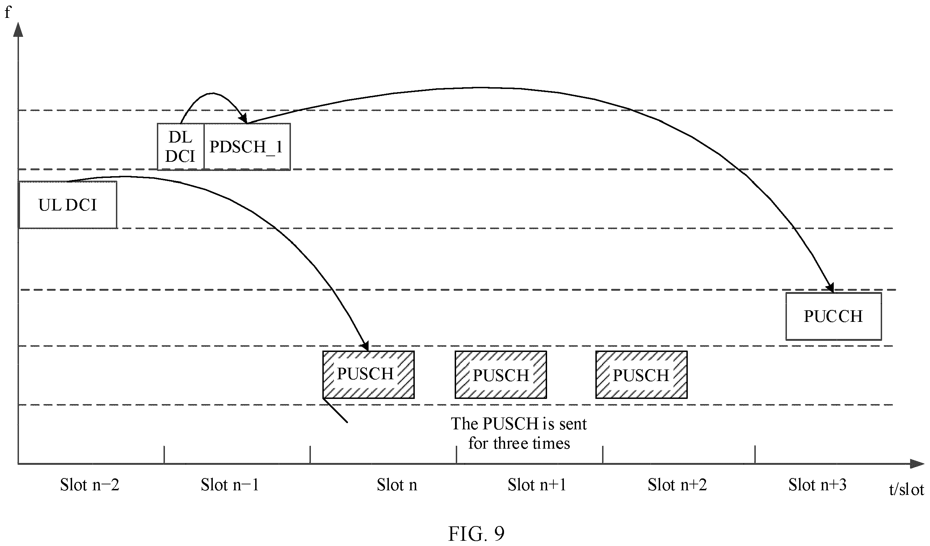

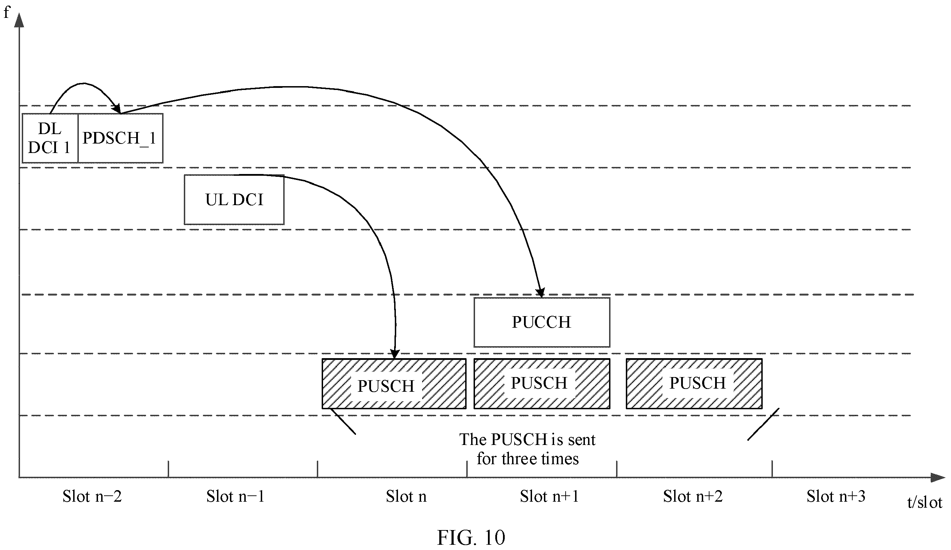

If the terminal device is required to send the PUCCH only in a slot in which PUSCH repetition sending ends, a feedback delay is increased. As shown in FIG. 9, the start time of the DL DCI is later than the start time of the UL DCI, the PUSCH is sent for three times and occupies three slots, and the PUCCH needs to be sent in a subsequent slot. If the PUSCH is repeated for hundreds of times, a feedback delay of the PUCCH is longer. This manner is not conducive to quick data processing. In this application, when the PUSCH is sent for the first time, the first DAI carried in the LTL DCI is used to determine the quantity of associated (that is, multiplexed) bits of the HARQ information. When the PUSCH is not sent for the first time, the total DAI or the counter DAI in the DL DCI is used to determine the quantity of associated (that is, multiplexed) bits of the HARQ information. In addition, in this application, the PUCCH may be scheduled in a slot in which the PUSCH is not transmitted for the first time, and when the PUCCH and the PUSCH overlap in time domain, the HARQ information carried on the PUCCH may be multiplexed onto the PUSCH, as shown in FIG. 10. The PUSCH is sent for three times and occupies three slots: a slot n, a slot n+1, and a slot n+2 respectively. The PUCCH is scheduled in the slot n+1, and the HARQ information carried on the PUCCH may be multiplexed onto the second PUSCH sending in the slot n+1.

In an optional embodiment, the PUSCH is sent for M times in time domain, where M is greater than or equal to 1, and a quantity of bits of the HARQ information multiplexed on the PUSCH sent for the first time is determined based on the first DAI. If the start time of the DL DCI is earlier than the start time of the UL DCI, a quantity of bits of the HARQ information multiplexed on the PUSCH sent for the $i^{th}$ time is determined based on the first DAI. If the start time of the DL DCI is later than the start time of the LTL DCI, the quantity of bits of the HARQ information multiplexed on the PUSCH sent for the $i^{th}$ time is determined based on the second DAI, where $1<i\leq M$.

In this embodiment of this application, the quantity of bits of the HARQ information associated on the PUSCH sent for the first time in this application may be determined based on the total DCI in the UL DCI, and HARQ information associated by a PUSCH other than the PUSCH sent for the first time needs to be determined based on a time sequence relationship between the UL DCI and the DL DCI.

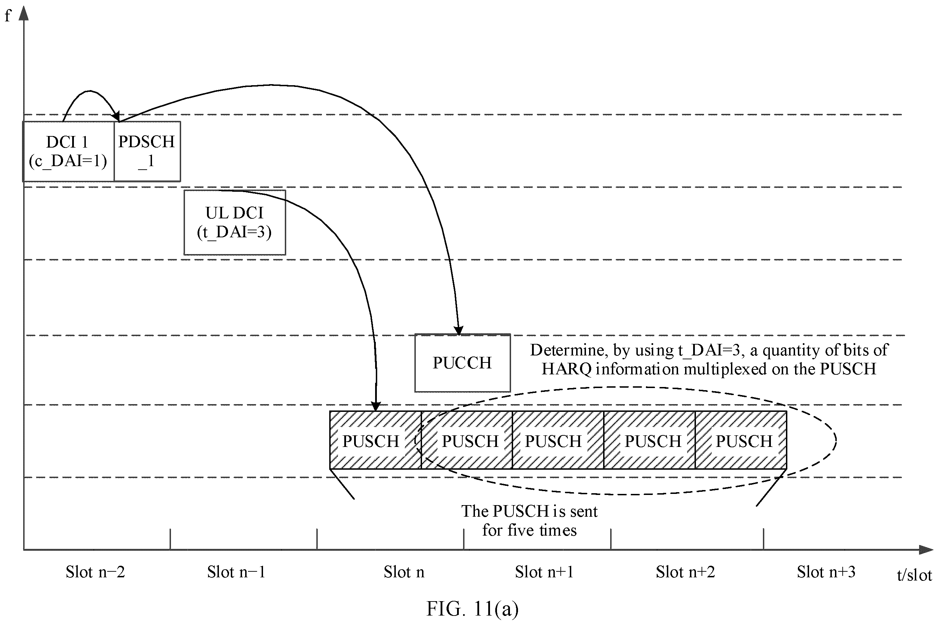

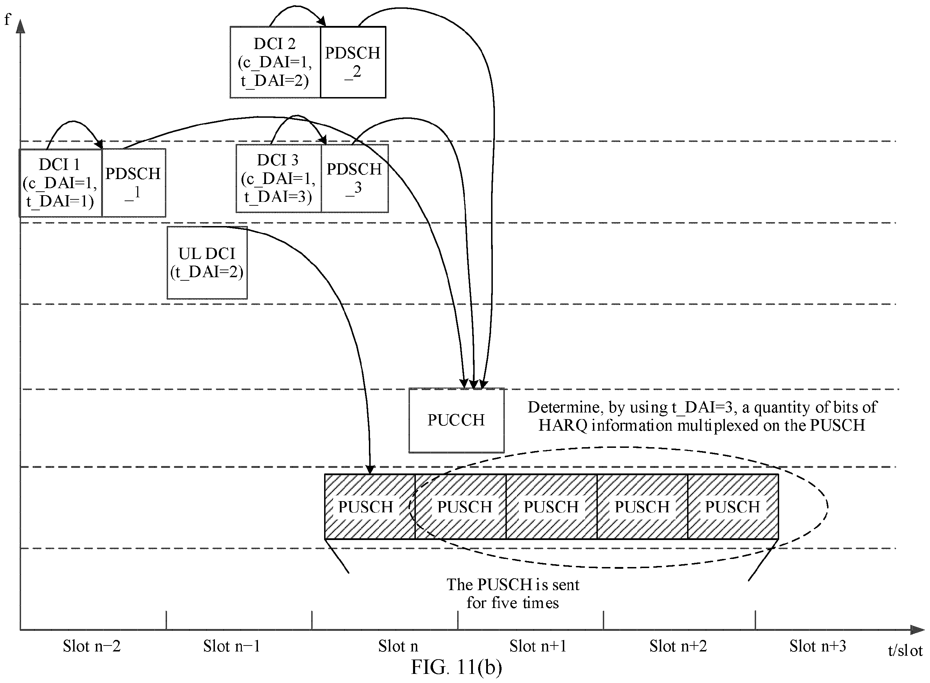

As shown in FIG. 11(a) and FIG. 11(b), the PUSCH is sent for five times and occupies a total of three slots: the slot n to the slot n+2. The PUCCH may transmit the HARQ information in a slot in which the PUSCH is sent for the second time. The start time of the LTL DCI shown in FIG. 11(a) is later than the start time of the last piece of DL DCI. In this case, the quantity of bits of the HARQ information multiplexed on PUSCHs sent for the second time to the fourth time may be determined based on the total DCI (t_DAI=3) in the UL DCI. The start time of the UL DCI shown in FIG. 11(b) is earlier than the start time of the last piece of DL DCI. In this case, the quantity of bits of the HARQ information multiplexed on PUSCHs sent for the second time to the fourth time may be determined based on the total DCI (t_DAI=3) in the DL DCI. In addition, in FIG. 11(a) and FIG. 11(b), the total DAI is illustrated by using t_DAI, and the counter DAI is illustrated by using c_ DAI.

In an optional embodiment, a quantity of bits of the HARQ information multiplexed on Q sent PUSCHs that are of a first redundancy version is determined based on the first DAI, Q is an integer, $1 \leq Q \leq M$, and the first redundancy version is a redundancy version 0 or 3; if the DL DCI is earlier than the LTL DCI in time sequence, a quantity of bits of the HARQ information multiplexed on M-Q sent PUSCHs that are of a second redundancy version is determined based on the first DAI; or if the DL DCI is later than the LTL DCI in time sequence, the quantity of bits of the HARQ information multiplexed on the M-Q sent PUSCHs that are of the second redundancy version is determined based on the second DAI, where the second redundancy version is a redundancy version other than the redundancy version 0 and/or 3.

In this embodiment of this application, a redundancy version is formed by dividing bits generated by an encoder into several groups, where the groups become different redundancy versions. Both the redundancy version 0 and the redundancy version 3 include system bits, but quantities of system bits included in the redundancy version 0 and the redundancy version 3 are different. Both the redundancy versions 0 and 3 may perform self-decoding without another redundancy version. When scheduling is performed based on different redundancy versions, scheduling signaling of the access network device may be reduced, and data processing efficiency and communication reliability may be improved.

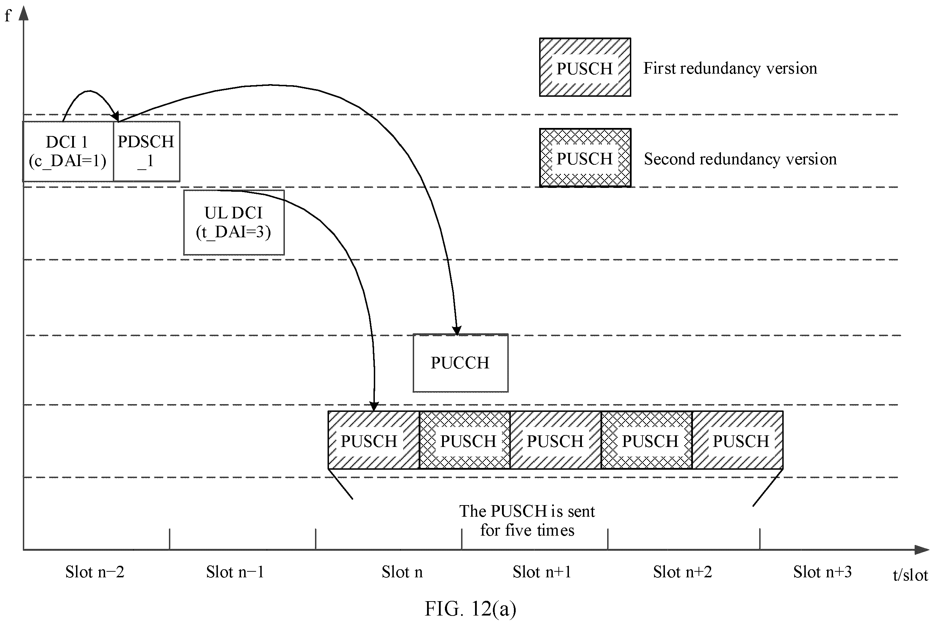

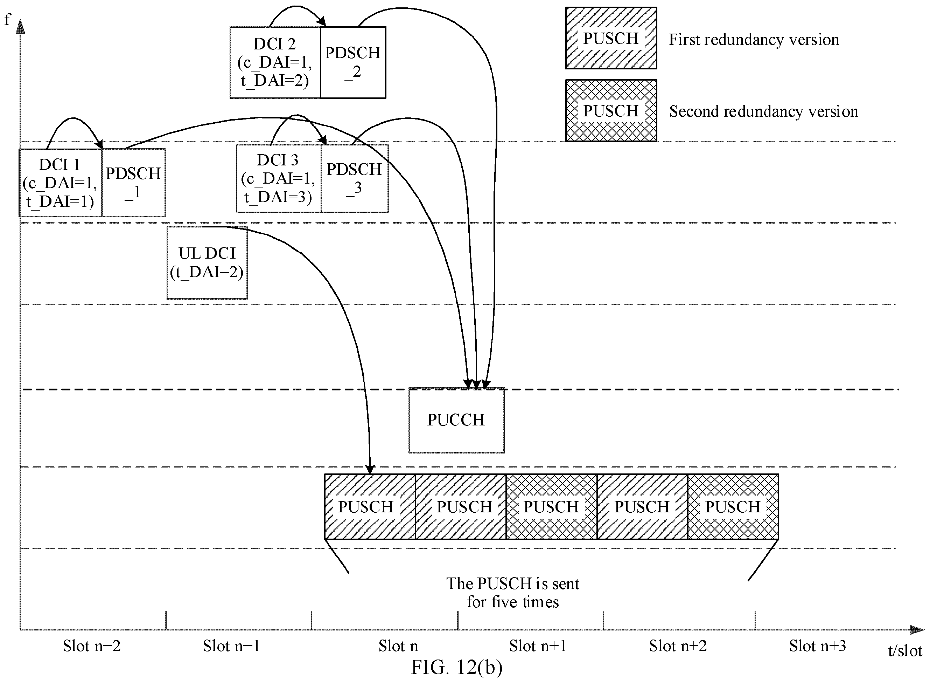

As shown in FIG. 12(a) and FIG. 12(b), the PUSCH is sent for five times and occupies a total of three slots: the slot n to the slot n+2. The PUCCH may transmit the HARQ information in a slot in which the PUSCH is sent for the second time. The start time of the LTL DCI shown in FIG. 12(a) is later than the start time of the last piece of DL DCI. In this case, the quantity of bits of the HARQ information multiplexed on three sent PUSCHs that are of the first redundancy version may be determined based on the total DCI (t_DAI=3) in the LTL DCI, and the quantity of bits of the HARQ information multiplexed on two (5-3=2) sent PUSCHs that are of the second redundancy version may also be determined based on the total DCI (t_DAI=3) in the UL DCI. The UL DCI shown in FIG. 12(b) is earlier than the last piece of DL DCI in time sequence. In this case, the quantity of bits of the HARQ information multiplexed on three sent PUSCHs that are of the first redundancy version may be determined based on the total DCI (t_DAI=2) in the UL DCI, and the quantity of bits of the HARQ information multiplexed on two (5-3=2) sent PUSCHs that are of the second redundancy version may also be determined based on the total DCI (t_DAI=3) in the DL DCI. In addition, in FIG. 12(a) and FIG. 12(b), the total DAI is illustrated by using t_DAI, and the counter DAI is illustrated by using c_ DAI. The second redundancy version is a redundancy version other than the first redundancy version.

In this embodiment of this application, compared a case in which HARQ information can be associated only in a time unit after PUSCH repetition is received, when the PUSCH repetition is sent, different HARQ information association policies are used for PUSCHs with different quantities of sending times, so that more time units can be reused, and a HARQ information transmission delay can be reduced.

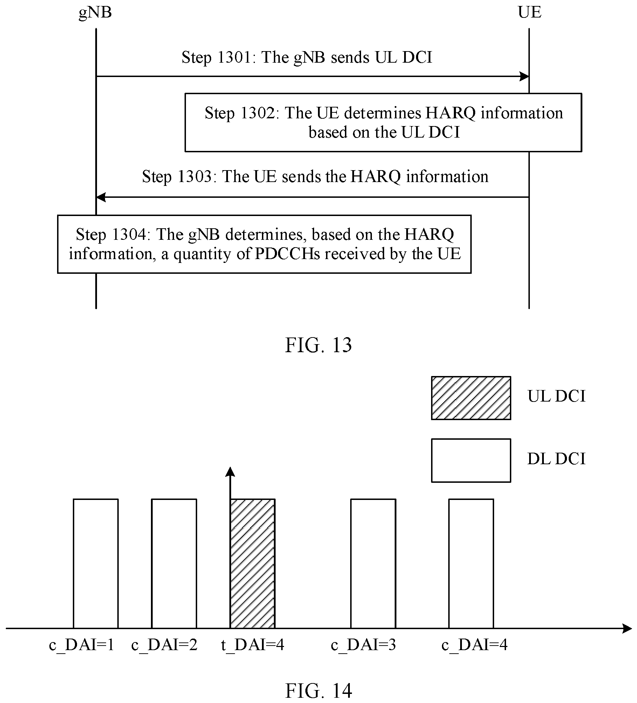

In the foregoing embodiment, the DAI in the UL DCI is compared with the DAI in the DL DCI to select a DAI based on which the HARQ information is generated. However, in this manner, a beneficial effect of the entire DAI mechanism may be lost to some extent. When the DAI in the DL DCI is used, because the last piece of DCI may encounter missed detection, the last piece of DCI actually detected by the terminal may be inconsistent with the last piece of DCI delivered by the base station. As a result, the access device and the terminal cannot align a quantity of HARQ bits. To ensure the beneficial effect of using the total DAI mechanism, this application provides another HARQ information transmission method. As shown in FIG. 13, the method may be jointly implemented by a terminal device and an access network device. In addition, the terminal device and the access network device may agree on a same rule to determine a quantity of bits of the HARQ information multiplexed on the PUSCH, so that the access network device verifies whether the quantity that is of bits of the HARQ information multiplexed on the PUSCH and that is determined by the terminal device is correct. In FIG. 13, an example in which a terminal device is UE and an access network device is a gNB is used for description. The method may be performed with reference to the following steps.

Step 1301: AgNB sends UL DCI, where the UL DCI is used to schedule a PUSCH, the LTL DCI includes a first DAI, the first DAI indicates a first PDCCH quantity and a second PDCCH quantity, the first PDCCH quantity indicates a quantity of PDCCHs scheduled by the access network device before the first downlink control information, the second PDCCH quantity indicates a maximum quantity of PDCCHs scheduled by the access network device after the first control information, and the PDCCH scheduled by the access network device is located on one or more carriers.

Correspondingly, the LTE receives the first downlink control information. The one or more carriers respectively correspond to single-carrier or carrier aggregation scenarios.

In an optional embodiment, the gNB further sends DL DCI, where the DL DCI is used to schedule one or more PDSCHs to feed back HARQ information on a same PUCCH, the DL DCI carries a second DAI, the second DAI indicates a quantity of PDCCHs already scheduled within a current PDCCH monitoring occasion, and the second DAI is less than or equal to the first DAI.

In an optional embodiment, the first DAI indicates a sum of the first PDCCH quantity and the second PDCCH quantity; and the DL DCI is received within L PDCCH monitoring occasions, where N pieces of DL DCI are included, L and N are both integers greater than or equal to 1 and L≤N, and as indexes of the PDCCH monitoring occasions increase, second DAIs sequentially increase.

Certainly, if the UE does not receive the PDSCH or the PDCCH, the UE may feed back NACK information. As shown in FIG. 14, the total DCI (t_DAI=4) in the first DAI, that is, the maximum quantity of PDCCHs that are on one or more carriers and that are scheduled by the gNB, is 4. Each time the UE receives one PDCCH, the second DAI in the DL DCI is incremented by 1 until the counter DAI in the second DAI is equal to the total DAI in the first DAI. In addition, in FIG. 14, the total DAI is illustrated by using t_DAI, and the counter DAI is illustrated by using c_ DAI.

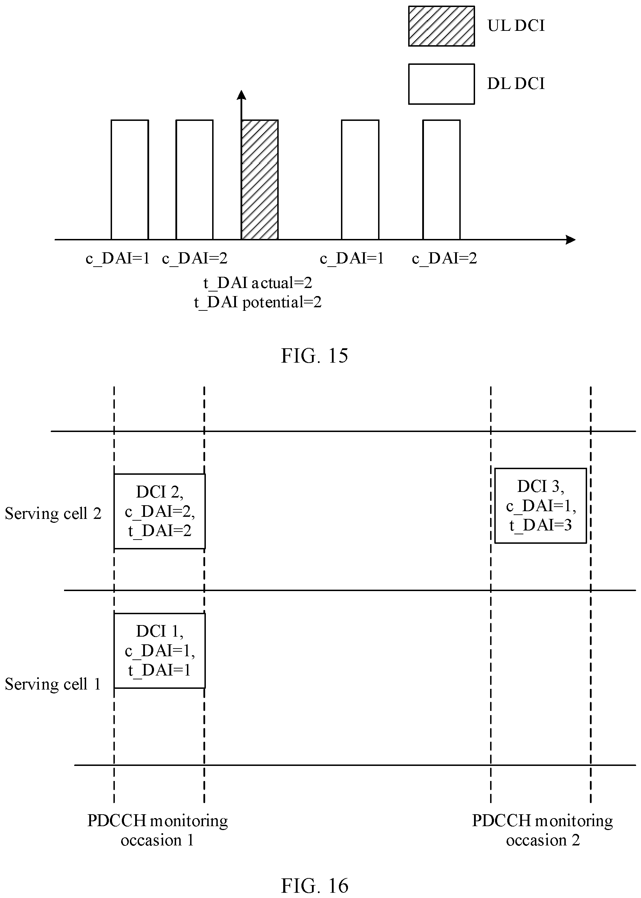

In an optional embodiment, the first DAI includes a first indicator value and a second indicator value, the first indicator value indicates a quantity of PDCCHs scheduled by the terminal device before the first downlink control information, that is, the first PDCCH quantity, and the second indicator value indicates a maximum quantity of PDCCHs scheduled after the first downlink control information, that is, the second PDCCH quantity. To be specific, the first DAI may indicate an actually scheduled DAI and a future schedulable DAI. If four bits are used for indication, two most significant bits (MSB) indicate a quantity of actually scheduled PDSCHs or PDCCHs, and two least significant bits (LSB) indicate a maximum quantity of PDSCHs or PDCCHs that may be sent by the gNB. A start time of M pieces of the second downlink control information is earlier than a start time of the first downlink control information, and as indexes of PDCCH monitoring occasions increase, second DAIs of the M pieces of the second downlink control information sequentially increase, where 1≤M≤N; and a start time of N-M pieces of the second downlink control information is later than the start time of the first downlink control information, and as the indexes of the PDCCH monitoring occasions increase, second DAIs of the N-M pieces of the second downlink control information sequentially increase starting from 1. As shown in FIG. 15, the total DCI (t_DAI actual=2, t_DAI potential=2) in the first DAI, that is, the maximum quantity of PDCCHs that are on one or more carriers and that are scheduled by the gNB, is 2+2. The DL DCI has been scheduled twice before the UL DCI, and the second DAI in the DL DCI may be counted starting from 1 until the count is 2. The gNB performs scheduling for a maximum of twice after the UL DCI, and the second DAI in the DL DCI is counted starting from 1 again until the count is 2. In addition, in FIG. 15, the total DAI is illustrated by using t_DAI, and the counter DAI is illustrated by using c_ DAI.

Step 1302: The LTE determines a quantity of bits of the HARQ information based on the UL DCI, where the HARQ information is determined after the UE receives the PDCCH.

Step 1303: The LTE sends the HARQ information.

Correspondingly, the gNB receives the HARQ information from the terminal device.

Step 1304: The gNB determines, based on the HARQ information, a quantity of PDCCHs received by the UE.

In this application, the maximum quantity of PDCCHs that are on one or more carriers and that are scheduled by the access network device before the PUSCH is indicated by the first DAI of the first downlink control information, so that a case in which a quantity of bits of the HARQ information cannot be aligned with the access network device because the terminal device misses detecting downlink control information can be avoided.

In addition, it should be further noted that a plurality of pieces of DL DCL may be detected on one PDCCH monitoring occasion, and a plurality of serving cells may be further included within one monitoring occasion. FIG. 16 is merely an example for description, and does not specifically limit a quantity of serving cells within one PDCCH monitoring occasion. If one PDCCH monitoring occasion includes a plurality of serving cells (that is, a serving cell 1 and a serving cell 2 in FIG. 16), and the plurality of serving cells include a plurality of pieces of second downlink control information, in this case, the second DAIs may increase based on an index sequence of the serving cells, then sequentially increase based on an index sequence of the PDCCH monitoring occasions. For clear description, for a counting rule of the second DL DCI, refer to two PDCCH monitoring occasions, that is, a PDCCH monitoring occasion 1 and a PDCCH monitoring occasion 2, a serving cell 1, and a serving cell 2 that are shown in FIG. 16 for description. Two pieces of DL DCI are detected on the PDCCH monitoring occasion 1, one piece of DL DCI is delivered by the serving cell 1, and the other piece of DL DCI is delivered by the serving cell 2. The total DAI of DL DCL 1 (delivered by the serving cell 1) may be counted as 1, and the counter DAI is also counted as 1. Because the index of the serving cell 2 is after that of the serving cell 1, the total DAI of DL DCL 2 (delivered by the serving cell 2) may be counted as 2, and the counter DAI is counted as 2. DL DCI 3 is detected on the PDCCH monitoring occasion 2, and the DL DCI 3 is delivered in the serving cell 2 (if the serving cell 11 does not deliver DL DCI, the DL DCI delivered by the serving cell 2 may be directly queried for counting). The total DAI of the DL DCL 3 (delivered by the serving cell 2) may be counted as 3, and the counter DAI is counted as 1. In addition, in FIG. 16, the total DAI is illustrated by using t_DAI, and the counter DAI is illustrated by using c_ DAI.

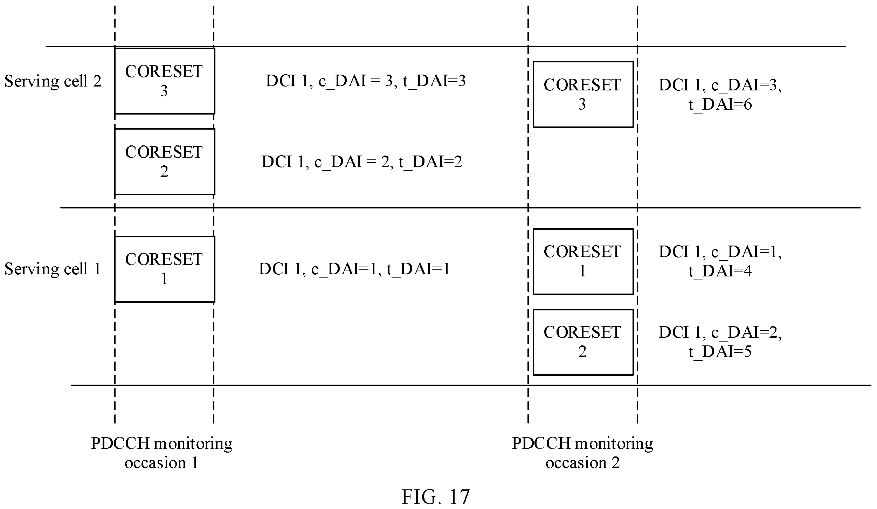

In another optional embodiment, if one PDCCH monitoring occasion includes a plurality of serving cells, one serving cell includes a plurality of pieces of the second downlink control information, and the second downlink control information is located in a plurality of control resource sets CORESETs or a plurality of search spaces search spaces, second DAIs increase based on an index sequence of the CORESETs or Search Spaces, then sequentially increase based on an index sequence of the serving cells, and then sequentially increase based on an index sequence of PDCCH monitoring occasions. To better describe the solution of this application, an example in which the second downlink control information is located in a plurality of CORESETs is used for description with reference to FIG. 17. FIG. 17 shows two PDCCH monitoring occasions, that is, a PDCCH monitoring occasion 1 and a PDCCH monitoring occasion 2, a serving cell 1, and a serving cell 2 for description. Three pieces of DL DCI are detected on the PDCCH monitoring occasion 1, and are located in three CORESETs. Three pieces of DL DCI are also detected on the PDCCH monitoring occasion 2, and are located in three CORESETs. The total DAI of the DL DCI corresponding to a CORESET 1 may be counted as 1, and the counter DAI is also counted as 1; the total DAI of the DL DCI corresponding to a CORESET 2 is counted as 2, and the counter DAI is also counted as 2; and the total DAI of the DL DCI corresponding to a CORESET 3 is counted as 3, and the counter DAI is also counted as 3. On the PDCCH monitoring occasion 2, the total DAI of the DL DCI corresponding to the CORESET 1 may be counted as 4, and the counter DAI is also counted as 1; the total DAI of the DL DCI corresponding to the CORESET 2 is counted as 5, and the counter DAI is also counted as 2; and the total DAI of the DL DCI corresponding to the CORESET 3 is counted as 6, and the counter DAI is counted as 3. In addition, in FIG. 17, the total DAI is illustrated by using t_DAI, and the counter DAI is illustrated by using c_ DAI.

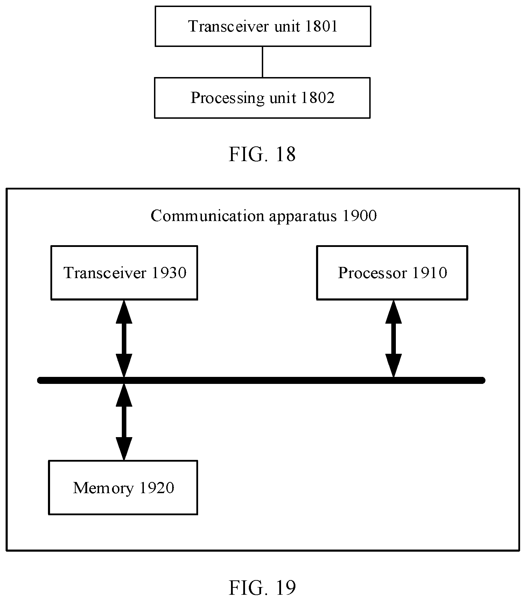

As shown in FIG. 18, an embodiment of this application provides a communication apparatus. The communication apparatus includes a transceiver unit 1801 and a processing unit 1802. The communication apparatus may be the foregoing terminal device or the foregoing access network device. When the communication device is the terminal device, the transceiver unit 1801 is configured to: receive first downlink control information, where the first downlink control information indicates a first DAI and is used to schedule a PUSCH; and receive second downlink control information, where the second downlink control information indicates a second DAI and is used to schedule one or more physical downlink shared channels PDSCHs to feed back hybrid automatic repeat request HARQ information on a same physical uplink control channel PUCCH. The processing unit 1802 is configured to select, based on a time sequence of the first downlink control information and the second downlink control information, the first DAI or the second DAI, to determine a quantity of bits of the HARQ information multiplexed on the PUSCH.

In this embodiment of this application, the first downlink control information may be understood as UL DCI for scheduling the uplink shared channel PUSCH, and the second downlink control information may be understood as DL DCI for scheduling the PDSCH. The time sequence mentioned herein may be a receive time sequence, a receive time, a sequence of a start time of the PDCCH carrying the DCI, or the like. This is not specifically limited herein in this application. The terminal device may determine, based on a time sequence relationship between the first downlink control information and the second control information, a DAI based on which the quantity of bits of the HARQ information associated on the PUSCH is determined. In this manner, scheduling overheads of the access network device can be reduced.

In an optional manner, the PUCCH overlaps the PUSCH in time domain, and the HARQ information is multiplexed onto the PUSCH.

In an optional manner, indication signaling is received, where the indication signaling indicates to feed back the HARQ information of the PDSCH on the PUCCH.

The indication signaling may be the same as or different from the first downlink control information and the second downlink control information. When the indication signaling is different from the first downlink control information and the second downlink control information, the indication signaling may be sent by using MAC or RRC. This is not specifically limited in this application.

In an optional manner, the one or more PDSCHs are located in a same time window, and the time window includes one or more time units. The time unit may be one of a slot, a symbol, a symbol group, a subframe, and a radio frame. This is not specifically limited in this application.

In an optional manner, N pieces of the second downlink control information are included, N is an integer greater than or equal to 1, and the processing unit 1802 is specifically configured to:

if a start time of the last piece of the second downlink control information in the N pieces of the second downlink control information is later than a start time of the first downlink control information, determine, based on a second DAI carried in the last piece of the second downlink control information in the N pieces of the second downlink control information, the quantity of bits of the HARQ information multiplexed on the PUSCH; or if the start time of the last piece of the second downlink control information in the N pieces of the second downlink control information is earlier than the start time of the first downlink control information, determine, based on the first DAI, the quantity of bits of the HARQ information multiplexed on the PUSCH.

In an optional manner, N pieces of the second downlink control information are included, N is an integer greater than or equal to 1, and the processing unit 1802 is specifically configured to:

if a start time of a second search space is later than a start time of a first search space, determine, based on a second DAI carried in the last piece of the second downlink control information in the N pieces of the second downlink control information, the quantity of bits of the HARQ information multiplexed on the PUSCH, where the second search space is a search space associated with a second PDCCH monitoring occasion, and the second PDCCH monitoring occasion is an occasion on which the last piece of the second downlink control information in the N pieces of the second downlink control information is received; and the first search space is a search space associated with a first PDCCH monitoring occasion, and the first PDCCH monitoring occasion is an occasion on which the first downlink control information is received; or if the start time of the second search space is earlier than the start time of the first search space, determine, based on the first DAI, the quantity of bits of the HARQ information multiplexed on the PUSCH.

In an optional manner, the processing unit 1802 is specifically configured to:

if an index of the second PDCCH monitoring occasion is greater than an index of the first PDCCH monitoring occasion, determine, based on the second DAI carried in the last piece of the second downlink control information in the N pieces of the second downlink control information, the quantity of bits of the HARQ information multiplexed on the PUSCH; or if the index of the second PDCCH monitoring occasion is less than the index of the first PDCCH monitoring occasion, determine, based on the first DAI, the quantity of bits of the HARQ information multiplexed on the PUSCH.

In an optional manner, the PUSCH is sent for M times in time domain, M is greater than or equal to 1, and a quantity of bits of the HARQ information multiplexed on the PUSCH sent for the first time is determined based on the first DAI;

if the start time of the second downlink control information is earlier than the start time of the first downlink control information, a quantity of bits of the HARQ information multiplexed on the PUSCH sent for an $i^{th}$ time is determined based on the first DAI; or if the second downlink control information is later than the first downlink control information in time sequence, the quantity of bits of the HARQ information multiplexed on the PUSCH sent for the $i^{th}$ time is determined based on the second DAI, where $1<i\leq M$.

In an optional manner, a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3; if the second downlink control information is earlier than the first downlink control information in time sequence, a quantity of bits of the HARQ information multiplexed on M-Q sent PUSCHs that are of a second redundancy version is determined based on the first DAI; or if the second downlink control information is later than the first downlink control information in time sequence, the quantity of bits of the HARQ information multiplexed on the M-Q sent PUSCHs that are of the second redundancy version is determined based on the second DAI, where the second redundancy version is a redundancy version other than the redundancy version 0 and/or 3.

An embodiment of this application provides another terminal device. A transceiver unit 1801 is configured to: receive first downlink control information, where the first downlink control information is carried on a physical downlink control channel PDCCH, the first downlink control information includes a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers. A processing unit is configured to determine a quantity of bits of hybrid automatic repeat request HARQ information based on the first DAI, where the HARQ information is determined after the terminal device receives the PDCCH. The transceiver unit is further configured to send the HARQ information.

In this embodiment of this application, the first downlink control information may be understood as UL DCI for scheduling the uplink shared channel PUSCH, and the second downlink control information may be understood as DL DCI for scheduling the downlink shared channel PDSCH. This is not specifically limited herein in this application. In this application, a maximum quantity of PDCCHs that are on one or more carriers and that are scheduled by the access network device before and after the first control information is indicated by the first DAI of the first downlink control information, so that a case in which a quantity of bits of the HARQ information cannot be aligned with the access network device because the terminal device misses detecting downlink control information can be avoided.

In an optional manner, the terminal device receives second downlink control information, where the second downlink control information indicates a second DAI and is used to schedule one or more physical downlink shared channels PDSCHs to feed back the HARQ information on a same physical uplink control channel PUCCH, the second downlink control information carries a second DAI, the second DAI indicates a quantity of PDCCHs already scheduled within a current PDCCH monitoring occasion, and the second DAI is less than or equal to the first DAI.

In an optional manner, the first DAI indicates a sum of the first PDCCH quantity and the second PDCCH quantity; and the second downlink control information is received within L PDCCH monitoring occasions, where N pieces of the second downlink control information are included, L and N are both integers greater than or equal to 1 and L≤N, as indexes of the PDCCH monitoring occasions increase, second DAIs sequentially increase, and the second DAI is less than the sum of the first PDCCH quantity and the second PDCCH quantity.

In an optional manner, the second downlink control information is received within L PDCCH monitoring occasions, N pieces of the second downlink control information are included, L and N are both integers greater than or equal to 1 and L≤N, the first DAI includes a first indicator value and a second indicator value, the first indicator value indicates the first PDCCH quantity, and the second indicator value indicates the second PDCCH quantity; a start time of M pieces of the second downlink control information is earlier than a start time of the first downlink control information, and as indexes of the PDCCH monitoring occasions increase, second DAIs of the M pieces of the second downlink control information sequentially increase, where 1≤M≤N, and M is less than or equal to the first PDCCH quantity; and a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

In an optional manner, if one PDCCH monitoring occasion includes a plurality of serving cells, and the plurality of serving cells include a plurality of pieces of the second downlink control information, second DAIs first increase based on an index ascending sequence of the serving cells, and then sequentially increase based on an index ascending sequence of PDCCH monitoring occasions.

In an optional manner, if one PDCCH monitoring occasion includes a plurality of serving cells, one serving cell includes a plurality of pieces of the second downlink control information, and the second downlink control information is located in a plurality of control resource sets CORESETs or a plurality of search spaces search spaces, second DAIs first increase based on an index ascending sequence of the CORESETs or Search Spaces, then sequentially increase based on an index ascending sequence of the serving cells, and then finally sequentially increase based on an index ascending sequence of PDCCH monitoring occasions.

When the communication apparatus is the access network device, the transceiver unit 1801 is configured to: send first downlink control information, where the first downlink control information indicates a first downlink assignment index DAI and is used to schedule a physical uplink shared channel PUSCH; and send second downlink control information, where the second downlink control information indicates a second DAI and is used to schedule one or more physical downlink shared channels PDSCHs to feed back hybrid automatic repeat request HARQ information on a same physical uplink control channel PUCCH. The processing unit 1802 is configured to select, based on a time sequence of the first downlink control information and the second downlink control information, the first DAI or the second DAI, to determine a quantity of bits of the HARQ information multiplexed on the PUSCH.

In this embodiment of this application, the first downlink control information may be understood as UL DCI for scheduling the uplink shared channel PUSCH, and the second downlink control information may be understood as DL DCI for scheduling the PDSCH. The time sequence mentioned herein may be a receive time sequence, a receive time, a sequence of a start time of the PDCCH carrying the DCI, or the like. This is not specifically limited herein in this application. The terminal device may determine, based on a time sequence relationship between the first downlink control information and the second control information, a DAI based on which the quantity of bits of the HARQ information associated on the PUSCH is determined. In this manner, scheduling overheads of the access network device can be reduced.

In an optional manner, the PUCCH overlaps the PUSCH in time domain, and the HARQ information is multiplexed onto the PUSCH.

In an optional manner, indication signaling is received, where the indication signaling indicates to feed back the HARQ information of the PDSCH on the PUCCH.

In an optional manner, the one or more PDSCHs are located in a same time window, and the time window includes one or more time units.

In an optional manner, N pieces of the second downlink control information are included, N is an integer greater than or equal to 1, and the processing unit 1802 is specifically configured to:

if a start time of the last piece of the second downlink control information in the N pieces of the second downlink control information is later than a start time of the first downlink control information, determine, based on a second DAI carried in the last piece of the second downlink control information in the N pieces of the second downlink control information, the quantity of bits of the HARQ information multiplexed on the PUSCH; or if the start time of the last piece of the second downlink control information in the N pieces of the second downlink control information is earlier than the start time of the first downlink control information, determine, based on the first DAI, the quantity of bits of the HARQ information multiplexed on the PUSCH.

In an optional manner, N pieces of the second downlink control information are included, N is an integer greater than or equal to 1, and the processing unit 1802 is specifically configured to:

if a start time of a second search space is later than a start time of a first search space, determine, based on a second DAI carried in the last piece of the second downlink control information in the N pieces of the second downlink control information, the quantity of bits of the HARQ information multiplexed on the PUSCH, where the second search space is a search space associated with a second PDCCH monitoring occasion, and the second PDCCH monitoring occasion is an occasion on which the access network device sends the last piece of the second downlink control information in the N pieces of the second downlink control information; and the first search space is a search space associated with a first PDCCH monitoring occasion, and the first PDCCH monitoring occasion is an occasion on which the access network device sends the first downlink control information; or if the start time of the second search space is earlier than the start time of the first search space, determine, based on the first DAI, the quantity of bits of the HARQ information multiplexed on the PUSCH.

In an optional manner, the processing unit 1802 is specifically configured to:

if an index of the second PDCCH monitoring occasion is greater than an index of the first PDCCH monitoring occasion, determine, based on the second DAI carried in the last piece of the second downlink control information in the N pieces of the second downlink control information, the quantity of bits of the HARQ information multiplexed on the PUSCH; or if the index of the second PDCCH monitoring occasion is less than the index of the first PDCCH monitoring occasion, determine, based on the first DAI, the quantity of bits of the HARQ information multiplexed on the PUSCH.

In an optional manner, the PUSCH is sent for M times in time domain, M is greater than or equal to 1, and a quantity of bits of the HARQ information multiplexed on the PUSCH sent for the first time is determined based on the first DAI; if the start time of the second downlink control information is earlier than the start time of the first downlink control information, a quantity of bits of the HARQ information multiplexed on the PUSCH sent for an $i^{th}$ time is determined based on the first DAI; or if the second downlink control information is later than the first downlink control information in time sequence, the quantity of bits of the HARQ information multiplexed on the PUSCH sent for the $i^{th}$ time is determined based on the second DAI, where $1<i\leq M$.

In an optional manner, a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3; if the second downlink control information is earlier than the first downlink control information in time sequence, a quantity of bits of the HARQ information multiplexed on M-Q sent PUSCHs that are of a second redundancy version is determined based on the first DAI; or if the second downlink control information is later than the first downlink control information in time sequence, the quantity of bits of the HARQ information multiplexed on the M-Q sent PUSCHs that are of the second redundancy version is determined based on the second DAI, where the second redundancy version is a redundancy version other than the redundancy version 0 and/or 3.

When the communication apparatus is the access network device, the transceiver unit 1801 is configured to send first downlink control information, where the first downlink control information is carried on a physical downlink control channel PDCCH, the first downlink control information includes a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers. The processing unit 1802 is configured to determine a quantity of bits of hybrid automatic repeat request HARQ information based on the first DAI, where the HARQ information is determined after the terminal device receives the PDCCH. The transceiver unit 1801 is further configured to receive the HARQ information.

In this embodiment of this application, the first downlink control information may be understood as UL DCI for scheduling the uplink shared channel PUSCH, and the second downlink control information may be understood as DL DCI for scheduling the downlink shared channel PDSCH. This is not specifically limited herein in this application. In this application, a maximum quantity of PDCCHs that are on one or more carriers and that are scheduled by the access network device before and after the first control information is indicated by the first DAI of the first downlink control information, so that a case in which a quantity of bits of the HARQ information cannot be aligned with the access network device because the terminal device misses detecting downlink control information can be avoided.

In an optional manner, the transceiver unit 1801 is further configured to send second downlink control information, where the second downlink control information indicates a second DAI and is used to schedule one or more physical downlink shared channels PDSCHs to feed back the hybrid automatic repeat request HARQ information on a same physical uplink control channel PUCCH, the second DAI indicates a quantity of PDCCHs already scheduled within a current PDCCH monitoring occasion, and the second DAI is less than or equal to the first DAI.

In an optional manner, the first DAI indicates a sum of the first PDCCH quantity and the second PDCCH quantity; and the second downlink control information is received within L PDCCH monitoring occasions, where N pieces of the second downlink control information are included, L and N are both integers greater than or equal to 1 and L≤N, as indexes of the PDCCH monitoring occasions increase, second DAIs sequentially increase, and the second DAI is less than the sum of the first PDCCH quantity and the second PDCCH quantity.

In an optional manner, the second downlink control information is received within L PDCCH monitoring occasions, N pieces of the second downlink control information are included, L and N are both integers greater than or equal to 1 and L≤N, the first DAI includes a first indicator value and a second indicator value, the first indicator value indicates the first PDCCH quantity, and the second indicator value indicates the second PDCCH quantity; a start time of M pieces of the second downlink control information is earlier than a start time of the first downlink control information, and as indexes of the PDCCH monitoring occasions increase, second DAIs of the M pieces of the second downlink control information sequentially increase, where 1≤M≤N, and M is less than or equal to the first PDCCH quantity; and a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

In an optional manner, if one PDCCH monitoring occasion includes a plurality of serving cells, and the plurality of serving cells include a plurality of pieces of the second downlink control information, second DAIs increase based on an index sequence of the serving cells, and then sequentially increase based on an index sequence of PDCCH monitoring occasions.

In an optional manner, if one PDCCH monitoring occasion includes a plurality of serving cells, one serving cell includes a plurality of pieces of the second downlink control information, and the second downlink control information is located in a plurality of control resource sets CORESETs or a plurality of search spaces search spaces, second DAIs increase based on an index sequence of the CORESETs or Search Spaces, then sequentially increase based on an index sequence of the serving cells, and then sequentially increase based on an index sequence of PDCCH monitoring occasions.

FIG. 19 shows a communication apparatus 1900 according to this application. For example, the communication apparatus 1900 may be a chip or a chip system. Optionally, in this embodiment of this application, the chip system may include a chip, or may include the chip and another discrete component.

The communication apparatus 1900 may include at least one processor 1910, and the communication apparatus 1900 may further include at least one memory 1920, configured to store a computer program, a program instruction, and/or data. The memory 1920 is coupled to the processor 1910. The coupling in this embodiment of this application may be an indirect coupling or a communication connection between apparatuses, units, or modules in an electrical form, a mechanical form, or another form, and is used for information exchange between the apparatuses, the units, or the modules. The processor 1910 may collaboratively operate with the memory 1920. The processor 1910 may execute the computer program stored in the memory 1920. Optionally, the at least one memory 1920 may be integrated into the processor 1910.

The communication apparatus 1900 may further include a transceiver 1930. The communication apparatus 1900 may exchange information with another device by using the transceiver 1930. The transceiver 1930 may be a circuit, a bus, a transceiver, or any other apparatus that may be configured to perform information exchange.

In a possible implementation, the communication apparatus 1900 may be applied to the foregoing terminal device, or may be the foregoing access network device. The memory 1920 stores necessary computer programs, program instructions, and/or data for implementing the function of the network device in any one of the foregoing embodiments. The processor 1910 may execute the computer program stored in the memory 1920, to complete the method in any one of the foregoing embodiments.

A specific connection medium between the transceiver 1930, the processor 1910, and the memory 1920 is not limited in this embodiment of this application. In this embodiment of this application, the memory 1920, the processor 1910, and the transceiver 1930 are connected by using a bus in FIG. 19. The bus is represented by a bold line in FIG. 19. A manner of connection between other components is merely an example for description, and is not limited thereto. The bus may be classified into an address bus, a data bus, a control bus, and the like. For ease of representation, only one thick line is used to represent the bus in FIG. 19, but this does not indicate that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logic block diagrams disclosed in this embodiment of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory may alternatively be any other medium that can be configured to carry or store expected program code in a form of an instruction or a data structure and that can be accessed by a computer. This is not limited thereto. The memory in this embodiment of this application may alternatively be a circuit or any other apparatus that can implement a storage function, and is configured to store a computer program, a program instruction, and/or data.

Based on the foregoing embodiments, an embodiment of this application further provides a readable storage medium. The readable storage medium stores instructions. When the instructions are executed, the method performed by the security detection device in any one of the foregoing embodiments is implemented. The readable storage medium may include any medium that can store program code, such as a USB flash drive, a removable hard disk, a read-only memory, a random-access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that instructions executed by the computer or the processor of the another programmable data processing device generate an apparatus for implementing a specific function in one or more processes in the flowcharts and/or in one or more blocks in the block diagrams.

These computer program instructions may also be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Apparently, a person skilled in the art may make various modifications and variations to this application without departing from the protection scope of this application. In this way, if these modifications and variations of this application fall within the scope of the claims of this application and equivalent technologies of this application, this application is also intended to include these modifications and variations.

**Claims**

**1.** A HARQ information transmission method, applied to a terminal device, comprising:

receiving first downlink control information, wherein the first downlink control information indicates a first downlink assignment index DAI and is used to schedule a physical uplink shared channel PUSCH;
receiving second downlink control information, wherein the second downlink control information indicates a second DAI and is used to schedule one or more physical downlink shared channels PDSCHs to feed back hybrid automatic repeat request HARQ information on a same physical uplink control channel PUCCH; and
selecting, based on a time sequence of the first downlink control information and the second downlink control information, the first DAI or the second DAI, to determine a quantity of bits of the HARQ information multiplexed on the PUSCH.

**2.** The method according to claim 1, wherein the PUCCH overlaps the PUSCH in time domain, and the HARQ information is multiplexed onto the PUSCH.

**3.** The method according to claim 1, wherein the method further comprises: receiving indication signaling, wherein the indication signaling indicates to feed back the HARQ information of the PDSCH on the PUCCH.

**4.** The method according to claim 1, wherein the one or more PDSCHs are located in a same time window, and the time window comprises one or more time units.

5. The method according to any one of claims 1 to 4, wherein N pieces of the second downlink control information are comprised, N is an integer greater than or equal to 1, and the selecting, based on a time sequence of the first downlink control information and the second downlink control information, the first DAI or the second DAI, to determine a quantity of bits of the HARQ information multiplexed on the PUSCH comprises:

   if a start time of the last piece of the second downlink control information in the N pieces of the second downlink control information is later than a start time of the first downlink control information, determining, based on a second DAI carried in the last piece of the second downlink control information in the N pieces of the second downlink control information, the quantity of bits of the HARQ information multiplexed on the PUSCH; or
   if the start time of the last piece of the second downlink control information in the N pieces of the second downlink control information is earlier than the start time of the first downlink control information, determining, based on the first DAI, the quantity of bits of the HARQ information multiplexed on the PUSCH.

6. The method according to any one of claims 1 to 4, wherein N pieces of the second downlink control information are comprised, N is an integer greater than or equal to 1, and the selecting, based on a time sequence of the first downlink control information and the second downlink control information, the first DAI or the second DAI, to determine a quantity of bits of the HARQ information multiplexed on the PUSCH comprises:

   if a start time of a second search space is later than a start time of a first search space, determining, based on a second DAI carried in the last piece of the second downlink control information in the N pieces of the second downlink control information, the quantity of bits of the HARQ information multiplexed on the PUSCH, wherein the second search space is a search space associated with a second PDCCH monitoring occasion, and the second PDCCH monitoring occasion is an occasion on which the last piece of the second downlink control information in the N pieces of the second downlink control information is received; and the first search space is a search space associated with a first PDCCH monitoring occasion, and the first PDCCH monitoring occasion is an occasion on which the first downlink control information is received; or
   if the start time of the second search space is earlier than the start time of the first search space, determining, based on the first DAI, the quantity of bits of the HARQ information multiplexed on the PUSCH.

7. The method according to claim 6, wherein the selecting, based on a time sequence of the first downlink control information and the second downlink control information, the first DAI or the second DAI, to determine a quantity of bits of the HARQ information multiplexed on the PUSCH comprises:

   if an index of the second PDCCH monitoring occasion is greater than an index of the first PDCCH monitoring occasion, determining, based on the second DAI carried in the last piece of the second downlink control information in the N pieces of the second downlink control information, the quantity of bits of the HARQ information multiplexed on the PUSCH; or
   if the index of the second PDCCH monitoring occasion is less than the index of the first PDCCH monitoring occasion, determining, based on the first DAI, the quantity of bits of the HARQ information multiplexed on the PUSCH.

8. The method according to any one of claims 1 to 7, wherein the PUSCH is sent for M times in time domain, M is greater than or equal to 1, and a quantity of bits of the HARQ information multiplexed on the PUSCH sent for the first time is determined based on the first DAI;

   if a start time of the second downlink control information is earlier than the start time of the first downlink control information, a quantity of bits of the HARQ information multiplexed on the PUSCH sent for an $i^{th}$ time is determined based on the first DAI; or
   if the second downlink control information is later than the first downlink control information in time sequence, the quantity of bits of the HARQ information multiplexed on the PUSCH sent for the $i^{th}$ time is determined based on the second DAI, wherein $1<i\leq M$.

9. The method according to claim 8, wherein a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3;

   if the second downlink control information is earlier than the first downlink control information in time sequence, a quantity of bits of the HARQ information multiplexed on M-Q sent PUSCHs that are of a second redundancy version is determined based on the first DAI; or
if the second downlink control information is later than the first downlink control information in time sequence, the quantity of bits of the HARQ information multiplexed on the M-Q sent PUSCHs that are of the second redundancy version is determined based on the second DAI, wherein the second redundancy version is a redundancy version other than the redundancy version 0 and/or 3.

**10.** A HARQ information transmission method, applied to a terminal device, comprising:

receiving first downlink control information, wherein the first downlink control information is carried on a physical downlink control channel PDCCH, the first downlink control information comprises a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers;
determining a quantity of bits of hybrid automatic repeat request HARQ information based on the first DAI, wherein the HARQ information is determined after the terminal device receives the PDCCH; and
sending the HARQ information.

**11.** The method according to claim 10, further comprising:
receiving second downlink control information, wherein the second downlink control information indicates a second DAI and is used to schedule one or more physical downlink shared channels PDSCHs to feed back the HARQ information on a same physical uplink control channel PUCCH, the second DAI indicates a quantity of PDCCHs already scheduled within a current PDCCH monitoring occasion, and the second DAI is less than or equal to the first DAI.

**12.** The method according to claim 10 or 11, wherein the first DAI indicates a sum of the first PDCCH quantity and the second PDCCH quantity; and
the second downlink control information is received within L PDCCH monitoring occasions, wherein N pieces of the second downlink control information are comprised, L and N are both integers greater than or equal to 1 and L≤N, as indexes of the PDCCH monitoring occasions increase, second DAIs sequentially increase, and the second DAI is less than the sum of the first PDCCH quantity and the second PDCCH quantity.

**13.** The method according to claim 10 or 11, wherein the second downlink control information is received within L PDCCH monitoring occasions, N pieces of the second downlink control information are comprised, L and N are both integers greater than or equal to 1 and L≤N, the first DAI comprises a first indicator value and a second indicator value, the first indicator value indicates the first PDCCH quantity, and the second indicator value indicates the second PDCCH quantity;

a start time of M pieces of the second downlink control information is earlier than a start time of the first downlink control information, and as indexes of the PDCCH monitoring occasions increase, second DAIs of the M pieces of the second downlink control information sequentially increase, wherein 1≤M≤N, and M is less than or equal to the first PDCCH quantity; and
a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

**14.** The method according to claim 12 or 13, wherein if one PDCCH monitoring occasion comprises a plurality of serving cells, and the plurality of serving cells comprise a plurality of pieces of the second downlink control information, second DAIs increase based on an index sequence of the serving cells, and then sequentially increase based on an index sequence of PDCCH monitoring occasions.

**15.** The method according to claim 12 or 13, wherein
if one PDCCH monitoring occasion comprises a plurality of serving cells, one serving cell comprises a plurality of pieces of the second downlink control information, and the second downlink control information is located in a plurality of control resource sets CORESETs or a plurality of search spaces search spaces, second DAIs increase based on an index sequence of the CORESETs or Search Spaces, then sequentially increase based on an index sequence of the serving cells, and then sequentially increase based on an index sequence of PDCCH monitoring occasions.

**16.** A HARQ information transmission method, applied to an access network device, comprising:

sending first downlink control information, wherein the first downlink control information indicates a first downlink assignment index DAI and is used to schedule a physical uplink shared channel PUSCH;
sending second downlink control information, wherein the second downlink control information indicates a second DAI and is used to schedule one or more physical downlink shared channels PDSCHs to feed back hybrid automatic repeat request HARQ information on a same physical uplink control channel PUCCH; and
selecting, based on a time sequence of the first downlink control information and the second downlink control information, the first DAI or the second DAI, to determine a quantity of bits of the HARQ information multiplexed on the PUSCH.

**17.** The method according to claim 16, wherein the PUCCH overlaps the PUSCH in time domain, and the HARQ information is multiplexed onto the PUSCH.

**18.** The method according to claim 16, wherein the method further comprises: receiving indication signaling, wherein the indication signaling indicates to feed back the HARQ information of the PDSCH on the PUCCH.

**19.** The method according to claim 16, wherein the one or more PDSCHs are located in a same time window, and the time window comprises one or more time units.

**20.** The method according to any one of claims 16 to 19, wherein N pieces of the second downlink control information are comprised, N is an integer greater than or equal to 1, and the selecting, based on a time sequence of the first downlink control information and the second downlink control information, the first DAI or the second DAI, to determine a quantity of bits of the HARQ information multiplexed on the PUSCH comprises:

if a start time of the last piece of the second downlink control information in the N pieces of the second downlink control information is later than a start time of the first downlink control information, determining, based on a second DAI carried in the last piece of the second downlink control information in the N pieces of the second downlink control information, the quantity of bits of the HARQ information multiplexed on the PUSCH; or
if the start time of the last piece of the second downlink control information in the N pieces of the second downlink control information is earlier than the start time of the first downlink control information, determining, based on the first DAI, the quantity of bits of the HARQ information multiplexed on the PUSCH.

**21.** The method according to any one of claims 16 to 19, wherein N pieces of the second downlink control information are comprised, N is an integer greater than or equal to 1, and the selecting, based on a time sequence of the first downlink control information and the second downlink control information, the first DAI or the second DAI, to determine a quantity of bits of the HARQ information multiplexed on the PUSCH comprises:

if a start time of a second search space is later than a start time of a first search space, determining, based on a second DAI carried in the last piece of the second downlink control information in the N pieces of the second downlink control information, the quantity of bits of the HARQ information multiplexed on the PUSCH, wherein the second search space is a search space associated with a second PDCCH monitoring occasion, and the second PDCCH monitoring occasion is an occasion on which the access network device sends the last piece of the second downlink control information in the N pieces of the second downlink control information; and the first search space is a search space associated with a first PDCCH monitoring occasion, and the first PDCCH monitoring occasion is an occasion on which the access network device sends the first downlink control information; or
if the start time of the second search space is earlier than the start time of the first search space, determining, based on the first DAI, the quantity of bits of the HARQ information multiplexed on the PUSCH.

**22.** The method according to claim 21, wherein the selecting, based on a time sequence of the first downlink control information and the second downlink control information, the first DAI or the second DAI, to determine a quantity of bits of the HARQ information multiplexed on the PUSCH comprises:

if an index of the second PDCCH monitoring occasion is greater than an index of the first PDCCH monitoring occasion, determining, based on the second DAI carried in the last piece of the second downlink control information in the N pieces of the second downlink control information, the quantity of bits of the HARQ information multiplexed on the PUSCH; or
if the index of the second PDCCH monitoring occasion is less than the index of the first PDCCH monitoring occasion, determining, based on the first DAI, the quantity of bits of the HARQ information multiplexed on the PUSCH.

**23.** The method according to any one of claims 16 to 22, wherein the PUSCH is sent for M times in time domain, M is greater than or equal to 1, and a quantity of bits of the HARQ information multiplexed on the PUSCH sent for the first time is determined based on the first DAI;

if the start time of the second downlink control information is earlier than the start time of the first downlink control information, a quantity of bits of the HARQ information multiplexed on the PUSCH sent for an $i^{th}$ time is determined based on the first DAI; or
if the second downlink control information is later than the first downlink control information in time sequence, the quantity of bits of the HARQ information multiplexed on the PUSCH sent for the $i^{th}$ time is determined based on the second DAI, wherein $1<i\leq M$.

**24.** The method according to claim 23, wherein a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3;

if the second downlink control information is earlier than the first downlink control information in time sequence, a quantity of bits of the HARQ information multiplexed on M-Q sent PUSCHs that are of a second redundancy version is determined based on the first DAI; or
if the second downlink control information is later than the first downlink control information in time sequence, the quantity of bits of the HARQ information multiplexed on the M-Q sent PUSCHs that are of the second redundancy version is determined based on the second DAI, wherein the second redundancy version is a redundancy version other than the redundancy version 0 and/or 3.

**25.** A HARQ information transmission method, applied to an access network device, comprising:

sending first downlink control information, wherein the first downlink control information is carried on a physical downlink control channel PDCCH, the first downlink control information comprises a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers;
determining a quantity of bits of hybrid automatic repeat request HARQ information based on the first DAI, wherein the HARQ information is determined after the terminal device receives the PDCCH; and
receiving the HARQ information.

**26.** The method according to claim 25, further comprising:
sending second downlink control information, wherein the second downlink control information indicates a second DAI and is used to schedule one or more physical downlink shared channels PDSCHs to feed back the HARQ information on a same physical uplink control channel PUCCH, the second DAI indicates a quantity of PDCCHs already scheduled within a current PDCCH monitoring occasion, and the second DAI is less than or equal to the first DAI.

**27.** The method according to claim 25 or 26, wherein the first DAI indicates a sum of the first PDCCH quantity and the second PDCCH quantity; and
the second downlink control information is received within L PDCCH monitoring occasions, wherein N pieces of the second downlink control information are comprised, L and N are both integers greater than or equal to 1 and $L\leq N$, as indexes of the PDCCH monitoring occasions increase, second DAIs sequentially increase, and the second DAI is less than the sum of the first PDCCH quantity and the second PDCCH quantity.

**28.** The method according to claim 25 or 26, wherein the second downlink control information is received within L PDCCH monitoring occasions, N pieces of the second downlink control information are comprised, L and N are both integers greater than or equal to 1 and $L\leq N$, the first DAI comprises a first indicator value and a second indicator value, the first indicator value indicates the first PDCCH quantity, and the second indicator value indicates the second PDCCH quantity;

a start time of M pieces of the second downlink control information is earlier than a start time of the first downlink control information, and as indexes of the PDCCH monitoring occasions increase, second DAIs of the M pieces of the second downlink control information sequentially increase, wherein 1≤M≤N, and M is less than or equal to the first PDCCH quantity; and

a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

**29.** The method according to claim 27 or 28, wherein if one PDCCH monitoring occasion comprises a plurality of serving cells, and the plurality of serving cells comprise a plurality of pieces of the second downlink control information, second DAIs increase based on an index sequence of the serving cells, and then sequentially increase based on an index sequence of PDCCH monitoring occasions.

**30.** The method according to claim 27 or 28, wherein if one PDCCH monitoring occasion comprises a plurality of serving cells, one serving cell comprises a plurality of pieces of the second downlink control information, and the second downlink control information is located in a plurality of control resource sets CORESETs or a plurality of search spaces search spaces, second DAIs increase based on an index sequence of the CORESETs or Search Spaces, then sequentially increase based on an index sequence of the serving cells, and then sequentially increase based on an index sequence of PDCCH monitoring occasions.

**31.** A terminal device, comprising:

a transceiver unit, configured to: receive first downlink control information, wherein the first downlink control information indicates a first downlink assignment index DAI and is used to schedule a physical uplink shared channel PUSCH; and receive second downlink control information, wherein the second downlink control information indicates a second DAI and is used to schedule one or more physical downlink shared channels PDSCHs to feed back hybrid automatic repeat request HARQ information on a same physical uplink control channel PUCCH; and

a processing unit, configured to select, based on a time sequence of the first downlink control information and the second downlink control information, the first DAI or the second DAI, to determine a quantity of bits of the HARQ information multiplexed on the PUSCH.

**32.** The terminal device according to claim 31, wherein the PUCCH overlaps the PUSCH in time domain, and the HARQ information is multiplexed onto the PUSCH.

**33.** The terminal device according to claim 31, wherein the transceiver unit is further configured to: receive indication signaling, wherein the indication signaling indicates to feed back the HARQ information of the PDSCH on the PUCCH.

**34.** The terminal device according to claim 31, wherein the one or more PDSCHs are located in a same time window, and the time window comprises one or more time units.

**35.** The terminal device according to any one of claims 31 to 34, wherein N pieces of the second downlink control information are comprised, N is an integer greater than or equal to 1, and the processing unit is specifically configured to:

if a start time of the last piece of the second downlink control information in the N pieces of the second downlink control information is later than a start time of the first downlink control information, determine, based on a second DAI carried in the last piece of the second downlink control information in the N pieces of the second downlink control information, the quantity of bits of the HARQ information multiplexed on the PUSCH; or

if the start time of the last piece of the second downlink control information in the N pieces of the second downlink control information is earlier than the start time of the first downlink control information, determine, based on the first DAI, the quantity of bits of the HARQ information multiplexed on the PUSCH.

**36.** The terminal device according to any one of claims 31 to 34, wherein N pieces of the second downlink control information are comprised, N is an integer greater than or equal to 1, and the processing unit is specifically configured to:

if a start time of a second search space is later than a start time of a first search space, determine, based on a second DAI carried in the last piece of the second downlink control information in the N pieces of the second downlink control information, the quantity of bits of the HARQ information multiplexed on the PUSCH, wherein the second search space is a search space associated with a second PDCCH monitoring occasion, and the second PDCCH monitoring occasion is an occasion on which the last piece of the second downlink control information in the N pieces of the second downlink control information is received; and the first search space is a search space associated with a first PDCCH monitoring occasion, and the first PDCCH monitoring occasion is an occasion on which the first downlink control information is received; or

if the start time of the second search space is earlier than the start time of the first search space, determine, based on the first DAI, the quantity of bits of the HARQ information multiplexed on the PUSCH.

**37.** The terminal device according to claim 36, wherein the processing unit is specifically configured to:

if an index of the second PDCCH monitoring occasion is greater than an index of the first PDCCH monitoring occasion, determine, based on the second DAI carried in the last piece of the second downlink control information in the N pieces of the second downlink control information, the quantity of bits of the HARQ information multiplexed on the PUSCH; or

if the index of the second PDCCH monitoring occasion is less than the index of the first PDCCH monitoring occasion, determine, based on the first DAI, the quantity of bits of the HARQ information multiplexed on the PUSCH.

**38.** The terminal device according to any one of claims 31 to 37, wherein the PUSCH is sent for M times in time domain, M is greater than or equal to 1, and a quantity of bits of the HARQ information multiplexed on the PUSCH sent for the first time is determined based on the first DAI;

if the start time of the second downlink control information is earlier than the start time of the first downlink control information, a quantity of bits of the HARQ information multiplexed on the PUSCH sent for an $i^{th}$ time is determined based on the first DAI; or

if the second downlink control information is later than the first downlink control information in time sequence, the quantity of bits of the HARQ information multiplexed on the PUSCH sent for the $i^{th}$ time is determined based on the second DAI, wherein $1<i\leq M$.

**39.** The terminal device according to claim 38, wherein a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3;

if the second downlink control information is earlier than the first downlink control information in time sequence, a quantity of bits of the HARQ information multiplexed on M-Q sent PUSCHs that are of a second redundancy version is determined based on the first DAI; or

if the second downlink control information is later than the first downlink control information in time sequence, the quantity of bits of the HARQ information multiplexed on the M-Q sent PUSCHs that are of the second redundancy version is determined based on the second DAI, wherein the second redundancy version is a redundancy version other than the redundancy version 0 and/or 3.

**40.** A terminal device, comprising:

a transceiver unit, configured to: receive first downlink control information, wherein the first downlink control information is carried on a physical downlink control channel PDCCH, the first downlink control information comprises a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers; and

a processing unit, configured to determine a quantity of bits of hybrid automatic repeat request HARQ information based on the first DAI, wherein the HARQ information is determined after the terminal device receives the PDCCH; and the transceiver unit is further configured to send the HARQ information.

**41.** The terminal device according to claim 40, wherein the transceiver unit is further configured to:
receive second downlink control information, wherein the second downlink control information indicates a second DAI and is used to schedule one or more physical downlink shared channels PDSCHs to feed back the HARQ information on a same physical uplink control channel PUCCH, the second DAI indicates a quantity of PDCCHs already scheduled within a current PDCCH monitoring occasion, and the second DAI is less than or equal to the first DAI.

**42.** The terminal device according to claim 40 or 41, wherein the first DAI indicates a sum of the first PDCCH quantity and the second PDCCH quantity; and

the second downlink control information is received within L PDCCH monitoring occasions, wherein N pieces of the second downlink control information are comprised, L and N are both integers greater than or equal to 1 and L≤N, as indexes of the PDCCH monitoring occasions increase, second DAIs sequentially increase, and the second DAI is less than the sum of the first PDCCH quantity and the second PDCCH quantity.

**43.** The terminal device according to claim 40 or 41, wherein the second downlink control information is received within L PDCCH monitoring occasions, N pieces of the second downlink control information are comprised, L and N are both integers greater than or equal to 1 and L≤N, the first DAI comprises a first indicator value and a second indicator value, the first indicator value indicates the first PDCCH quantity, and the second indicator value indicates the second PDCCH quantity;

a start time of M pieces of the second downlink control information is earlier than a start time of the first downlink control information, and as indexes of the PDCCH monitoring occasions increase, second DAIs of the M pieces of the second downlink control information sequentially increase, wherein 1≤M≤N, and M is less than or equal to the first PDCCH quantity; and
a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

**44.** The terminal device according to claim 42 or 43, wherein if one PDCCH monitoring occasion comprises a plurality of serving cells, and the plurality of serving cells comprise a plurality of pieces of the second downlink control information, second DAIs increase based on an index sequence of the serving cells, and then sequentially increase based on an index sequence of PDCCH monitoring occasions.

**45.** The terminal device according to claim 42 or 43, wherein
if one PDCCH monitoring occasion comprises a plurality of serving cells, one serving cell comprises a plurality of pieces of the second downlink control information, and the second downlink control information is located in a plurality of control resource sets CORESETs or a plurality of search spaces search spaces, second DAIs increase based on an index sequence of the CORESETs or Search Spaces, then sequentially increase based on an index sequence of the serving cells, and then sequentially increase based on an index sequence of PDCCH monitoring occasions.

**46.** An access network device, comprising:

a transceiver unit, configured to send first downlink control information, wherein the first downlink control information indicates a first downlink assignment index DAI and is used to schedule a physical uplink shared channel PUSCH; and send second downlink control information, wherein the second downlink control information indicates a second DAI and is used to schedule one or more physical downlink shared channels PDSCHs to feed back hybrid automatic repeat request HARQ information on a same physical uplink control channel PUCCH; and
a processing unit, configured to select, based on a time sequence of the first downlink control information and the second downlink control information, the first DAI or the second DAI, to determine a quantity of bits of the HARQ information multiplexed on the PUSCH.

**47.** The access network device according to claim 46, wherein the PUCCH overlaps the PUSCH in time domain, and the HARQ information is multiplexed onto the PUSCH.

**48.** The access network device according to claim 46, wherein the transceiver unit is further configured to: receive indication signaling, wherein the indication signaling indicates to feed back the HARQ information of the PDSCH on the PUCCH.

**49.** The access network device according to claim 46, wherein the one or more PDSCHs are located in a same time window, and the time window comprises one or more time units.

**50.** The access network device according to any one of claims 46 to 49, wherein N pieces of the second downlink control information are comprised, N is an integer greater than or equal to 1, and the processing unit is specifically configured to:

if a start time of the last piece of the second downlink control information in the N pieces of the second downlink control information is later than a start time of the first downlink control information, determine, based on a second DAI carried in the last piece of the second downlink control information in the N pieces of the second downlink control information, the quantity of bits of the HARQ information multiplexed on the PUSCH; or
if the start time of the last piece of the second downlink control information in the N pieces of the second downlink control information is earlier than the start time of the first downlink control information, determine, based on the first DAI, the quantity of bits of the HARQ information multiplexed on the PUSCH.

**51.** The access network device according to any one of claims 46 to 49, wherein N pieces of the second downlink control information are comprised, N is an integer greater than or equal to 1, and the processing unit is specifically configured to:

if a start time of a second search space is later than a start time of a first search space, determine, based on a second DAI carried in the last piece of the second downlink control information in the N pieces of the second downlink control information, the quantity of bits of the HARQ information multiplexed on the PUSCH, wherein the second search space is a search space associated with a second PDCCH monitoring occasion, and the second PDCCH monitoring occasion is an occasion on which the access network device sends the last piece of the second downlink control information in the N pieces of the second downlink control information; and the first search space is a search space associated with a first PDCCH monitoring occasion, and the first PDCCH monitoring occasion is an occasion on which the access network device sends the first downlink control information; or
if the start time of the second search space is earlier than the start time of the first search space, determine, based on the first DAI, the quantity of bits of the HARQ information multiplexed on the PUSCH.

**52.** The access network device according to claim 51, wherein the processing unit is specifically configured to:

if an index of the second PDCCH monitoring occasion is greater than an index of the first PDCCH monitoring occasion, determine, based on the second DAI carried in the last piece of the second downlink control information in the N pieces of the second downlink control information, the quantity of bits of the HARQ information multiplexed on the PUSCH; or
if the index of the second PDCCH monitoring occasion is less than the index of the first PDCCH monitoring occasion, determine, based on the first DAI, the quantity of bits of the HARQ information multiplexed on the PUSCH.

**53.** The access network device according to any one of claims 46 to 52, wherein the PUSCH is sent for M times in time domain, M is greater than or equal to 1, and a quantity of bits of the HARQ information multiplexed on the PUSCH sent for the first time is determined based on the first DAI;

if the start time of the second downlink control information is earlier than the start time of the first downlink control information, a quantity of bits of the HARQ information multiplexed on the PUSCH sent for an $i^{th}$ time is determined based on the first DAI; or
if the second downlink control information is later than the first downlink control information in time sequence, the quantity of bits of the HARQ information multiplexed on the PUSCH sent for the $i^{th}$ time is determined based on the second DAI, wherein $1<i\leq M$.

**54.** The access network device according to claim 53, wherein a quantity of bits of the HARQ information multiplexed on Q sent PUSCHs that are of a first redundancy version is determined based on the first DAI, Q is an integer, $1\leq Q\leq M$, and the first redundancy version is a redundancy version 0 or 3;

if the second downlink control information is earlier than the first downlink control information in time sequence, a quantity of bits of the HARQ information multiplexed on M-Q sent PUSCHs that are of a second redundancy version is determined based on the first DAI; or
if the second downlink control information is later than the first downlink control information in time sequence, the quantity of bits of the HARQ information multiplexed on the M-Q sent PUSCHs that are of the second redundancy version is determined based on the second DAI, wherein the second redundancy version is a redundancy version other than the redundancy version 0 and/or 3.

**55.** An access network device, comprising:

a transceiver unit, configured to send first downlink control information, wherein the first downlink control information is carried on a physical downlink control channel PDCCH, the first downlink control information comprises a first downlink assignment index DAI, the first DAI indicates a first PDCCH quantity and a second PDCCH quantity, the first PDCCH quantity indicates a quantity of physical downlink control channels PDCCHs scheduled by an access network device before the first downlink control information, the second PDCCH quantity indicates a maximum quantity of PDCCHs scheduled by the access network device after the first control information, and the PDCCH scheduled by the access network device is located on one or more carriers; and

a processing unit, configured to determine a quantity of bits of hybrid automatic repeat request HARQ information based on the first DAI, wherein the HARQ information is determined after the terminal device receives the PDCCH; and the transceiver unit is further configured to receive the HARQ information.

**56.** The access network device according to claim 55, wherein the transceiver unit is further configured to: send second downlink control information, wherein the second downlink control information indicates a second DAI and is used to schedule one or more physical downlink shared channels PDSCHs to feed back the HARQ information on a same physical uplink control channel PUCCH, the second DAI indicates a quantity of PDCCHs already scheduled within a current PDCCH monitoring occasion, and the second DAI is less than or equal to the first DAI.

**57.** The access network device according to claim 55 or 56, wherein the first DAI indicates a sum of the first PDCCH quantity and the second PDCCH quantity; and

the second downlink control information is received within L PDCCH monitoring occasions, wherein N pieces of the second downlink control information are comprised, L and N are both integers greater than or equal to 1 and L≤N, as indexes of the PDCCH monitoring occasions increase, second DAIs sequentially increase, and the second DAI is less than the sum of the first PDCCH quantity and the second PDCCH quantity.

**58.** The access network device according to claim 55 or 56, wherein the second downlink control information is received within L PDCCH monitoring occasions, N pieces of the second downlink control information are comprised, L and N are both integers greater than or equal to 1 and L≤N, the first DAI comprises a first indicator value and a second indicator value, the first indicator value indicates the first PDCCH quantity, and the second indicator value indicates the second PDCCH quantity;

a start time of M pieces of the second downlink control information is earlier than a start time of the first downlink control information, and as indexes of the PDCCH monitoring occasions increase, second DAIs of the M pieces of the second downlink control information sequentially increase, wherein 1≤M≤N, and M is less than or equal to the first PDCCH quantity; and

a start time of N-M pieces of the second downlink control information is later than the start time of the first downlink control information, and as the indexes of the PDCCH monitoring occasions increase, second DAIs of the N-M pieces of the second downlink control information sequentially increase starting from 1, and N-M is less than or equal to the second PDCCH quantity.

**59.** The access network device according to claim 57 or 58, wherein if one PDCCH monitoring occasion comprises a plurality of serving cells, and the plurality of serving cells comprise a plurality of pieces of the second downlink control information, second DAIs increase based on an index sequence of the serving cells, and then sequentially increase based on an index sequence of PDCCH monitoring occasions.

**60.** The access network device according to claim 57 or 58, wherein

if one PDCCH monitoring occasion comprises a plurality of serving cells, one serving cell comprises a plurality of pieces of the second downlink control information, and the second downlink control information is located in a plurality of control resource sets CORESETs or a plurality of search spaces search spaces, second DAIs increase based on an index sequence of the CORESETs or Search Spaces, then sequentially increase based on an index sequence of the serving cells, and then sequentially increase based on an index sequence of PDCCH monitoring occasions.

**61.** A terminal device, comprising a processor and a memory, wherein

the memory is configured to store a computer program; and

the processor is configured to execute the computer program stored in the memory, so that the terminal device performs the method according to any one of claims 1 to 15.

**62.** An access network device, comprising a processor and a memory, wherein

the memory is configured to store a computer program; and

the processor is configured to execute the computer program stored in the memory, so that the access network device performs the method according to any one of claims 16 to 30.

**63.** A computer-readable storage medium, wherein the computer-readable storage medium stores an instruction, and when the instruction is executed, a computer is enabled to perform the method according to any one of claims 1 to 15 or any one of claims 16 to 30.

100
120
110

FIG. 1

gNB
UE
Step 201: The gNB sends first downlink control information, where the first downlink control information indicates a first DAI and is used to schedule a PUSCH

Step 202: The gNB sends second downlink control information, where the second downlink control information indicates a second DAI and is used to schedule one or more PDSCHs to feed back HARQ information on a same PUCCH

Step 203A: The gNB selects, based on a time sequence of the first downlink control information and the second downlink control information, the first DAI or the second DAI, to determine a quantity of bits of the HARQ information multiplexed on the PUSCH

Step 203B: The UE selects, based on a time sequence of the first downlink control information and the second downlink control information, the first DAI or the second DAI, to determine a quantity of bits of the HARQ information multiplexed on the PUSCH

FIG. 2

f
DL DCI 1
PDSCH _1
UL DCI
DL DCI 2
PDSCH _2
PUCCH
PUSCH
Slot n−2
Slot n−1
Slot n
Slot n+1
Slot n+2
Slot n+3
t/slot

FIG. 3

Time window 1
N pieces of DL DCI
DL DCI
...
DL DCI
DL DCI
The last piece of DL DCI
(a)
A time interval is S seconds
DL DCI
...
DL DCI-A
DL DCI-B
W seconds
If W>S, the last piece of DL DCI is DL DCI-A
(b)
HARQ feedback
DL DCI 1
PDSCH
...
DL DCI N−1
PDSCH
DL DCI N
PDSCH
PUCCH
N pieces of DL DCI
The last piece of DL DCI
(c)

FIG. 4

Single-carrier
f
cc
DCI 1 (c_DAI=1)
PDSCH _1
DCI 2 (c_DAI=2)
PDSCH _2
DCI 3 (c_DAI=3)
PDSCH _3
UL DCI (t_DAI=3)
Determine, by using t_DAI=3, a quantity of bits of HARQ information multiplexed on the PUSCH
Slot n−2
Slot n−1
Slot n
Slot n+1
Slot n+2
Slot n+3
t/slot

FIG. 5(a)

f
cc
cc
cc
DCI 1 (t_DAI=1, c_DAI=1)
PDSCH _1
DCI 3 (t_DAI=3, c_DAI=1)
PDSCH _3
Carrier aggregation
DCI 2 (t_DAI=2, c_DAI=2)
PDSCH _2
DCI 4 (t_DAI=4, c_DAI=2)
PDSCH _4
DCI 5 (t_DAI=5, c_DAI=1)
PDSCH _5
UL DCI (t_DAI=3)
Determine, by using t_DAI=5, a quantity of bits of HARQ information multiplexed on the PUSCH
Slot n−2
Slot n−1
Slot n
Slot n+1
Slot n+2
Slot n+3
t/slot

FIG. 5(b)

Single-carrier
DCI 1 (c_DAI=1)
PDSCH _1
UL DCI (t_DAI=2)
DCI 2 (c_DAI=2)
PDSCH _2
DCI 3 (c_DAI=3)
PDSCH _3
Determine, by using c_DAI=3, a quantity of bits of HARQ information multiplexed on the PUSCH
cc
Slot n−2
Slot n−1
Slot n
Slot n+1
Slot n+2
Slot n+3
t/slot

FIG. 5(c)

f
Single-carrier
First search space
Second search space
cc
DL DCI 1
(c_DAI=1)
PDSCH_1
UL DCI
(t_DAI=1)
DL DCI 2
(c_DAI=2)
PDSCH_2
PDCCH
monitoring
occasion
Slot n−1
PDCCH
monitoring
occasion
Slot n
PDCCH
monitoring
occasion
Slot n+1
t/slot

FIG. 6(a)

f
Carrier aggregation
First search space
Second search space
cc
DL DCI 1 (c_DAI=1, t_DAI=2)
PDSCH_1
UL DCI (t_DAI=2)
DL DCI 3 (c_DAI=1, t_DAI=3)
PDSCH_3
cc
DL DCI 2 (c_DAI=2, t_DAI=2)
PDSCH_2
PDCCH monitoring occasion
Slot n−1
PDCCH monitoring occasion
Slot n
PDCCH monitoring occasion
Slot n+1
t/slot

FIG. 6(b)

f
Single-carrier
cc
DCI 1
(c_DAI=1)
PDSCH_1
UL DCI
(t_DAI=1)
DCI 2
(c_DAI=2)
PDSCH_2
t/slot
PDCCH
monitoring
occasion 1
PDCCH
monitoring
occasion 2
PDCCH
monitoring
occasion 3
Slot n−1
Slot n
Slot n+1


FIG. 7(a)

Carrier aggregation
f
cc
cc
cc
DCI 1
(t_DAI=1,
c_DAI=1)
PDSCH_1
DCI 1
(t_DAI=2,
c_DAI=2)
PDSCH_1
UL DCI
(t_DAI=4)
t/slot
PDCCH
monitoring
occasion 1
Slot n−1
Slot n
PDCCH
monitoring
occasion 2
Slot n+1

FIG. 7(b)

Slot N
Slot N+1
Slot N+2
PUSCH transmission 1
PUSCH transmission 2
PUSCH transmission 3
Type (type) A
Slot N
Slot N+1
Slot N+2
PUSCH
PUSCH
PUSCH
PUSCH
PUSCH
PUSCH
Actual transmission 1
Actual transmission 2
Actual transmission 3
Actual transmission 4
Actual transmission 5
Actual transmission 6
Type (type) B

FIG. 8

f
UL DCI
DL DCI
PDSCH_1
PUSCH
PUSCH
PUSCH
PUCCH
The PUSCH is sent for three times
Slot n−2
Slot n−1
Slot n
Slot n+1
Slot n+2
Slot n+3
t/slot

FIG. 9

f
t/slot
DL DCI 1
PDSCH_1
UL DCI
PUCCH
PUSCH
PUSCH
PUSCH
The PUSCH is sent for three times
Slot n−2
Slot n−1
Slot n
Slot n+1
Slot n+2
Slot n+3

FIG. 10

f
DCI 1
(c_DAI=1)
PDSCH
_1
UL DCI
(t_DAI=3)
PUCCH
Determine, by using t_DAI=3, a quantity of bits of HARQ information multiplexed on the PUSCH
PUSCH
PUSCH
PUSCH
PUSCH
PUSCH
The PUSCH is sent for five times
Slot n−2
Slot n−1
Slot n
Slot n+1
Slot n+2
Slot n+3
t/slot


FIG. 11(a)

f
DCI 2 (c_DAI=1, t_DAI=2)
PDSCH _2
DCI 1 (c_DAI=1, t_DAI=1)
PDSCH _1
DCI 3 (c_DAI=1, t_DAI=3)
PDSCH _3
UL DCI (t_DAI=2)
PUCCH
Determine, by using t_DAI=3, a quantity of bits of HARQ information multiplexed on the PUSCH
PUSCH
PUSCH
PUSCH
PUSCH
PUSCH
The PUSCH is sent for five times
Slot n−2
Slot n−1
Slot n
Slot n+1
Slot n+2
Slot n+3
t/slot

FIG. 11(b)

f
PUSCH
First redundancy version
PUSCH
Second redundancy version
DCI 1
(c_DAI=1)
PDSCH
_1
UL DCI
(t_DAI=3)
PUCCH
PUSCH
PUSCH
PUSCH
PUSCH
PUSCH
The PUSCH is sent
for five times
Slot n−2
Slot n−1
Slot n
Slot n+1
Slot n+2
Slot n+3
t/slot

FIG. 12(a)

f
DCI 2
(c_DAI=1,
t_DAI=2)
PDSCH
_2
PUSCH
First redundancy version
PUSCH
Second redundancy version
DCI 1
(c_DAI=1,
t_DAI=1)
PDSCH
_1
DCI 3
(c_DAI=1,
t_DAI=3)
PDSCH
_3
UL DCI
(t_DAI=2)
PUCCH
PUSCH
PUSCH
PUSCH
PUSCH
PUSCH
The PUSCH is sent
for five times
Slot n−2
Slot n−1
Slot n
Slot n+1
Slot n+2
Slot n+3
t/slot

FIG. 12(b)

gNB
UE
Step 1301: The gNB sends UL DCI
Step 1302: The UE determines HARQ information based on the UL DCI
Step 1303: The UE sends the HARQ information
Step 1304: The gNB determines, based on the HARQ information, a quantity of PDCCHs received by the UE

FIG. 13

UL DCI
DL DCI
c_DAI=1
c_DAI=2
t_DAI=4
c_DAI=3
c_DAI=4

FIG. 14

UL DCI
DL DCI
c_DAI=1
c_DAI=2
c_DAI=1
c_DAI=2
t_DAI actual=2
t_DAI potential=2

FIG. 15

Serving cell 2
DCI 2,
c_DAI=2,
t_DAI=2
DCI 3,
c_DAI=1,
t_DAI=3
Serving cell 1
DCI 1,
c_DAI=1,
t_DAI=1
PDCCH monitoring
occasion 1
PDCCH monitoring
occasion 2

FIG. 16

Serving cell 2

CORESET 3

CORESET 2

DCI 1, c_DAI = 3, t_DAI=3

DCI 1, c_DAI = 2, t_DAI=2

CORESET 3

DCI 1, c_DAI=3, t_DAI=6

Serving cell 1

CORESET 1

DCI 1, c_DAI=1, t_DAI=1

CORESET 1

DCI 1, c_DAI=1, t_DAI=4

CORESET 2

DCI 1, c_DAI=2, t_DAI=5

PDCCH monitoring occasion 1

PDCCH monitoring occasion 2

FIG. 17

Transceiver unit 1801
Processing unit 1802

FIG. 18

Communication apparatus 1900
Transceiver 1930
Processor 1910
Memory 1920

FIG. 19

**INTERNATIONAL SEARCH REPORT**

International application No. **PCT/CN2022/082835**

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

WPABS; CNTXT; CNKI; ENTXT; CJFD; 3GPP; IEEE: DAI, HARQ, 反馈, 比特, 上行授权, PUSCH, PDSCH, PUCCH, 时序, 顺序, 最新, 最后, feedback, bit+, UL w grant, tim+, sequence?, order, new+, last

**C. DOCUMENTS CONSIDERED TO BE RELEVANT**

| Category* | Citation of document, with indication, where appropriate, of the relevant passages | Relevant to claim No. |
|---|---|---|
| A | ERICSSON. ""R1-1907456 HARQ and scheduling enhancements for NR-U""<br>*3GPP tsg_ran\wg1_rl1,* Vol. , No. , 04 May 2019 (2019-05-04),<br>ISSN: ,<br>entire document | 1-63 |
| A | HUAWEI. ""R1-1903423 Feature lead summary of HARQ enhancements for NR-U""<br>*3GPP tsg_ran\wg1_rl1,* Vol. , No. , 26 February 2019 (2019-02-26),<br>ISSN: ,<br>entire document | 1-63 |
| A | WO 2021032015 A1 (HUAWEI TECHNOLOGIES CO., LTD.) 25 February 2021 (2021-02-25)<br>entire document | 1-63 |
| A | US 2020295882 A1 (SAMSUNG ELECTRONICS CO., LTD.) 17 September 2020 (2020-09-17)<br>entire document | 1-63 |
| A | US 2021050950 A1 (SAMSUNG ELECTRONICS CO., LTD.) 18 February 2021 (2021-02-18)<br>entire document | 1-63 |

☐ Further documents are listed in the continuation of Box C.　☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 May 2022** | **30 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/082835**

| Patent document cited in search report | | | Publication date (day/month/year) | Patent family member(s) | | | Publication date (day/month/year) |
|---|---|---|---|---|---|---|---|
| WO | 2021032015 | A1 | 25 February 2021 | None | | | |
| US | 2020295882 | A1 | 17 September 2020 | SG | 11202002729 S | A | 29 April 2020 |
| | | | | KR | 20200050983 | A | 12 May 2020 |
| | | | | CN | 109586877 | A | 05 April 2019 |
| | | | | AU | 2021212111 | A1 | 26 August 2021 |
| | | | | EP | 3673607 | A1 | 01 July 2020 |
| | | | | AU | 2018341374 | A1 | 14 May 2020 |
| US | 2021050950 | A1 | 18 February 2021 | EP | 3925129 | A1 | 22 December 2021 |
| | | | | KR | 20220045927 | A | 13 April 2022 |
| | | | | WO | 2021029674 | A1 | 18 February 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202110362433